(19) **Europäisches Patentamt / European Patent Office / Office européen des brevets**

(11) **EP 3 846 551 A1**

(12) **EUROPEAN PATENT APPLICATION**
published in accordance with Art. 153(4) EPC

(43) Date of publication:
**07.07.2021 Bulletin 2021/27**

(51) Int Cl.:
**H04W 52/18** (2009.01)

(21) Application number: **19878933.1**

(22) Date of filing: **28.10.2019**

(86) International application number:
**PCT/CN2019/113612**

(87) International publication number:
**WO 2020/088391 (07.05.2020 Gazette 2020/19)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(30) Priority: **29.10.2018 CN 201811271837**

(71) Applicant: **HUAWEI TECHNOLOGIES CO., LTD.**
**Shenzhen, Guangdong 518129 (CN)**

(72) Inventors:
- **ZHANG, Xingwei**
 **Shenzhen, Guangdong 518129 (CN)**
- **LI, Chao**
 **Shenzhen, Guangdong 518129 (CN)**
- **ZHANG, Lili**
 **Shenzhen, Guangdong 518129 (CN)**

(74) Representative: **Maiwald Patent- und Rechtsanwaltsgesellschaft mbH**
**Elisenhof**
**Elisenstraße 3**
**80335 München (DE)**

(54) **POWER CONTROL METHOD AND TERMINAL DEVICE**

(57) This application provides a power control method and a terminal device. The method includes: A terminal device receives N pieces of feedback information, where N is an integer greater than or equal to 1; and the terminal device determines a transmit power of the terminal device based on the N pieces of feedback information. In the foregoing technical solution, communication between terminal devices does not depend on a network device, and the terminal devices at two communication ends exchange information, so that transmit powers of the terminal devices are dynamically controlled. The technical solution may be applied to device-to-device communication, for example, V2X, LTE-V, V2V, the internet of vehicles, MTC, the IoT, LTE-M, M2M, and the internet of things.

FIG. 3

**Description**

This application claims priority to Chinese Patent Application No. 201811271837.4, filed with the Chinese Patent Office on October 29, 2018 and entitled "POWER CONTROL METHOD AND TERMINAL DEVICE", which is incorporated herein by reference in its entirety.

**TECHNICAL FIELD**

This application relates to the communications field, and more specifically, to a power control method and a terminal device.

**BACKGROUND**

For communication between a terminal device and a base station, the base station controls a transmit power of the terminal device. The base station may send a transmission power control (transmission power control, TPC) command to the terminal device based on a power headroom report (power headroom report, PHR) and a last transmit power of the terminal device that are reported by the terminal device, so that the terminal device adjusts a transmit power based on the TPC command.

However, for communication between terminal devices, both a transmit end and a receive end are terminal devices, and the base station cannot obtain sufficient information to correctly adjust transmit powers of the terminal devices. Therefore, a method for controlling the transmit power of the terminal device by the base station is applicable to communication between terminal devices.

Therefore, how to implement dynamic power control during communication between terminal devices becomes an urgent problem to be resolved.

**SUMMARY**

This application provides a power control method and a terminal device, to dynamically control transmit powers of terminal devices during communication between the terminal devices.

According to a first aspect, this application provides a power control method. The method includes: A terminal device receives N pieces of feedback information, where N is an integer greater than or equal to 1; and the terminal device determines a transmit power of the terminal device based on the N pieces of feedback information.

In the foregoing technical solution, communication between terminal devices does not depend on a network device, and the terminal devices at two communication ends exchange information, so that transmit powers of the terminal devices are dynamically controlled.

In a possible implementation, the N pieces of feedback information include at least one of acknowledgement ACK information, negative acknowledgement NACK information, discontinuous transmission DTX information, and channel quality information CQI.

In the foregoing technical solution, the transmit power of the terminal device is dynamically controlled by reusing ACK information, NACK information, DTX information, and CQI, so that signaling overheads between the terminal devices can be reduced and implementation is easy.

In a possible implementation, that the terminal device determines a transmit power of the terminal device based on the N pieces of feedback information includes: The terminal device increases the transmit power when the N pieces of feedback information include NACK information or DTX information; or the terminal device decreases the transmit power when the N pieces of feedback information are N pieces of ACK information.

In the foregoing technical solution, the transmit power of the terminal device is dynamically adjusted based on a type of feedback information, so that the transmit power can be quickly adjusted.

In a possible implementation, the N pieces of feedback information include at least one of ACK information, NACK information, and discontinuous transmission DTX information. That the terminal device determines a transmit power of the terminal device based on the N pieces of feedback information includes: The terminal device determines the transmit power of the terminal device based on a quantity of pieces of ACK information, and/or a quantity of pieces of NACK information, and/or a quantity of pieces of discontinuous transmission DTX information.

In the foregoing technical solution, the transmit power of the terminal device is determined based on the quantity of pieces of ACK, NACK, or DTX. The quantity of pieces of ACK, the NACK, or the DTX can reflect a data transmission status, and therefore dynamic power control can be effectively performed on the terminal device in the foregoing solution.

In a possible implementation, that the terminal device determines the transmit power of the terminal device based on a quantity of pieces of ACK information, and/or a quantity of pieces of NACK information, and/or a quantity of pieces of discontinuous transmission DTX information includes: The terminal device decreases the transmit power when the quantity of pieces of ACK information is greater than or equal to a first threshold, or when the quantity of pieces of NACK information is less than or equal to a second threshold, or when the quantity of pieces of DTX information is less than or equal to a third threshold; or the terminal device increases the transmit power when the quantity of pieces of ACK information is less than or equal to a first threshold, or when the quantity of pieces of NACK information is greater than or equal to a second threshold, or when the quantity of pieces of DTX information is greater than or equal to a third threshold; or the terminal device decreases the transmit power when a ratio of the quantity of pieces of ACK information to N is greater than or equal to a fourth threshold, or when a ratio of the quantity of pieces of NACK information to N is less than or equal to a fifth threshold, or when a ratio of the quantity of pieces of DTX information to N is less than or equal to a sixth threshold; or the terminal device increases the transmit power when a ratio of the quantity of pieces of ACK information to N is less than or equal to a fourth threshold, or when a ratio of the quantity of pieces of NACK information to N is greater than or equal to a fifth threshold, or when a ratio of the quantity of pieces of DTX information to N is greater than or equal to a sixth threshold.

In the foregoing technical solution, when the quantity of ACKs is relatively large, the quantity of NACKs is relatively small, or the quantity of pieces of DTX is relatively small, the transmit power of the terminal device is decreased, so that power consumption of the terminal device can be reduced, and interference to a surrounding terminal device can also be reduced. When the quantity of ACKs is relatively small, or the quantity of NACKs is relatively large, or the quantity of pieces of DTX is relatively large, the transmit power of the terminal device is increased, so that a probability of receiving NACKs can be decreased, and a probability of receiving ACKs can be increased. The ratio of the quantity of ACKs to the total quantity of pieces of received feedback information, the ratio of the quantity of NACKs to the total quantity of pieces of received feedback information, or the ratio of the quantity of pieces of DTX to the total quantity of pieces of received feedback information is used to determine whether to increase or decrease the transmit power of the terminal device, so that a determining result is more reliable.

In a possible implementation, that the terminal device determines a transmit power of the terminal device based on a quantity of pieces of ACK information, and/or a quantity of pieces of NACK information, and/or a quantity of pieces of discontinuous transmission DTX information includes: determining a transmit power adjustment amount based on the quantity of pieces of ACK information; or determining a transmit power adjustment amount based on the quantity of pieces of NACK information; or determining a transmit power adjustment amount based on the quantity of pieces of DTX information; or determining a transmit power adjustment amount based on a ratio of the quantity of pieces of ACK information to N; or determining a transmit power adjustment amount based on a ratio of the quantity of pieces of NACK information to N; or determining a transmit power adjustment amount based on a ratio of the quantity of pieces of DTX information to N; and determining, by the terminal device, the transmit power of the terminal device based on the transmit power adjustment amount.

In the foregoing technical solution, the terminal device first determines the transmit power adjustment amount, and then further determines the transmit power of the terminal device, so that the determined transmit power of the terminal device can be more accurate.

In a possible implementation, the determining a transmit power adjustment amount includes: The terminal device determines the transmit power adjustment amount of the terminal device based on a correspondence between the quantity of pieces of ACK information and the transmit power adjustment amount; or the terminal device determines the transmit power adjustment amount of the terminal device based on a correspondence between the quantity of pieces of NACK information and the transmit power adjustment amount; or the terminal device determines the transmit power adjustment amount of the terminal device based on a correspondence between the quantity of pieces of DTX information and the transmit power adjustment amount; or the terminal device determines the transmit power adjustment amount of the terminal device based on a correspondence between the ratio of the quantity of pieces of ACK information to N and the transmit power adjustment amount; or the terminal device determines the transmit power adjustment amount of the terminal device based on a correspondence between the ratio of the quantity of pieces of NACK information to N and the transmit power adjustment amount; or the terminal device determines the transmit power adjustment amount of the terminal device based on a correspondence between the ratio of the quantity of pieces of DTX information to N and the transmit power adjustment amount.

In the foregoing technical solution, the transmit power adjustment amount is determined through table lookup, which is fast and accurate.

In a possible implementation, the quantity of pieces of ACK information is a quantity of pieces of continuously received ACK information, or the quantity of pieces of NACK information is a quantity of pieces of continuously received NACK information, or the quantity of pieces of DTX information is a quantity of pieces of continuously received DTX information. According to the foregoing technical solution, power fluctuation caused by frequent adjustment of the transmit power can be avoided.

In a possible implementation, N is greater than or equal to Y, and Y is configured by a network device or Y is preconfigured.

In the foregoing technical solution, a minimum value of the quantity of pieces of feedback information is preconfigured, and N is enabled to be greater than or equal to the minimum value, so that the determined transmit power can be more reliable.

In a possible implementation, the N pieces of feedback information are N pieces of CQI; and that the terminal device determines a transmit power of the terminal device based on the N pieces of feedback information includes: The terminal device determines the transmit power of the terminal device based on values of the N pieces of CQI.

In the foregoing technical solution, the terminal device adjusts the transmit power based on channel quality. The quantity of pieces of CQI can reflect a data transmission status, and therefore dynamic power control can be effectively performed on the terminal device in the foregoing solution.

In a possible implementation, that the terminal device determines the transmit power of the terminal device based on values of the N pieces of CQI includes: The terminal device determines an average value of the N pieces of CQI based on the values of the N pieces of CQI; and the terminal device decreases the transmit power of the terminal device when the average value is greater than or equal to a seventh threshold, or the terminal device increases the transmit power when the average value is less than or equal to a seventh threshold.

In the foregoing technical solution, an average value of values of a plurality of pieces of CQI is calculated, and whether to increase or decrease the transmit power of the terminal device is further determined depending on the obtained average value, so that an occasional CQI measurement error can be avoided, and power adjustment is more accurate.

In a possible implementation, that the terminal device determines the transmit power of the terminal device based on values of the N pieces of CQI includes: The terminal device determines an average value of the N pieces of CQI based on the values of the N pieces of CQI; the terminal device determines a transmit power adjustment amount based on the average value; and the terminal device determines the transmit power of the terminal device based on the transmit power adjustment amount.

In the foregoing technical solution, the terminal device first determines the transmit power adjustment amount, and then further determines the transmit power of the terminal device, so that the determined transmit power of the terminal device can be more accurate.

In a possible implementation, that the terminal device determines a transmit power adjustment amount based on the average value includes: The terminal device determines the transmit power adjustment amount based on a correspondence between the average value and the transmit power adjustment amount.

In the foregoing technical solution, the transmit power adjustment amount is determined through table lookup, which is fast and accurate.

In a possible implementation, the N pieces of feedback information are feedback information received by the terminal device within a time window.

In the foregoing technical solution, feedback information within a period of time is counted up, so that each power adjustment of the terminal device is fair and accurate.

In a possible implementation, the N pieces of feedback information are N pieces of transmission power control TPC information, and the TPC information is used to indicate a transmit power adjustment amount; and that the terminal device determines a transmit power of the terminal device based on the N pieces of feedback information includes: The terminal device determines the transmit power of the terminal device based on the N pieces of TPC information.

In the foregoing technical solution, a data receiving device determines the transmit power adjustment amount of the terminal device, and indicates the transmit power adjustment amount to the terminal device by using the TPC information, so that the transmit power of the terminal device can be dynamically controlled during communication between terminal devices.

In a possible implementation, before the terminal device receives the N pieces of feedback information, the method further includes: The terminal device sends power headroom reports PHRs to M second terminal devices, where M is an integer greater than or equal to 1.

In a possible implementation, N is 1, the feedback information is channel quality information CQI, and that the terminal device determines a transmit power of the terminal device based on the N pieces of feedback information includes: The terminal device decreases the transmit power when a value of the CQI is greater than or equal to a threshold, or the terminal device increases the transmit power when a value of the CQI is less than or equal to a threshold.

In the foregoing technical solution, when the CQI is relatively small, it means that channel quality is relatively poor, and the transmit power of the terminal device is increased to increase a probability of successful data transmission. When the CQI is relatively large, it means that channel quality is relatively good, and the transmit power of the terminal device is decreased, so that power consumption of the terminal device can be reduced, and interference to a surrounding terminal device can also be reduced.

According to a second aspect, this application provides a power control method. The method includes: A second terminal device sends feedback information to a first terminal device, where the feedback information is used to indicate the first terminal device to determine a transmit power of the first terminal device based on the feedback information.

In the foregoing technical solution, communication between terminal devices does not depend on a network device, and the terminal devices at two communication ends exchange information, so that transmit powers of the terminal devices are dynamically controlled.

In a possible implementation, the feedback information is acknowledgement ACK information, negative acknowledgement NACK information, discontinuous transmission DTX information, or channel quality information CQI.

In the foregoing technical solution, the transmit power of the terminal device is dynamically controlled by reusing ACK information, NACK information, DTX information, and CQI, so that signaling overheads between the terminal devices can be reduced and implementation is easy.

In a possible implementation, the feedback information is transmission power control TPC information, and the TPC information is used to indicate a transmit power adjustment amount.

In the foregoing technical solution, the second terminal device determines a transmit power adjustment amount of the first terminal device, and indicates the transmit power adjustment amount to the first terminal device by using the TPC information, so that the transmit power of the terminal device can be dynamically controlled during communication between terminal devices.

In a possible implementation, the method further includes: The second terminal device determines the transmit power adjustment amount based on a quantity of acknowledgement ACK messages and/or a quantity of negative acknowledgement NACK messages.

In a possible implementation, the method further includes: The second terminal device measures CQI, and the second terminal device determines the transmit power adjustment amount based on a value of the CQI.

In a possible implementation, before the second terminal device measures the CQI, the method further includes: The second terminal device receives a CQI request sent by the first terminal device.

In a possible implementation, the method further includes: The second terminal device receives a power headroom report PHR and a last transmit power of the terminal device that are sent by the first terminal device, and the second terminal device determines the transmit power adjustment amount based on the PHR and the last transmit power of the terminal device.

According to a third aspect, this application provides a terminal device. The terminal device includes: a receiving module, configured to receive N pieces of feedback information, where N is an integer greater than or equal to 1; and a processing module, configured to determine a transmit power of the terminal device based on the N pieces of feedback information.

In the foregoing technical solution, communication between terminal devices does not depend on a network device, and the terminal devices at two communication ends exchange information, so that transmit powers of the terminal devices are dynamically controlled.

In a possible implementation, the N pieces of feedback information include at least one of acknowledgement ACK information, negative acknowledgement NACK information, discontinuous transmission DTX information, and channel quality information CQI.

In the foregoing technical solution, the transmit power of the terminal device is dynamically controlled by reusing ACK information, NACK information, DTX information, and CQI, so that signaling overheads between the terminal devices can be reduced and implementation is easy.

In a possible implementation, the processing module is specifically configured to increase the transmit power when the N pieces of feedback information include NACK information or DTX information or decrease the transmit power when the N pieces of feedback information are N pieces of ACK information.

In the foregoing technical solution, the transmit power of the terminal device is dynamically adjusted based on a type of feedback information, so that the transmit power can be quickly adjusted.

In a possible implementation, the N pieces of feedback information include at least one of ACK information, NACK information, and discontinuous transmission DTX information. The processing module is specifically configured to determine the transmit power of the terminal device based on a quantity of pieces of ACK information, and/or a quantity of pieces of NACK information, and/or a quantity of pieces of discontinuous transmission DTX information.

In the foregoing technical solution, the transmit power of the terminal device is determined based on the quantity of pieces of ACK, NACK, or DTX. The quantity of pieces of ACK, the NACK, or the DTX can reflect a data transmission status, and therefore dynamic power control can be effectively performed on the terminal device in the foregoing solution.

In a possible implementation, the processing module is specifically configured to: decrease the transmit power when the quantity of pieces of ACK information is greater than or equal to a first threshold, or when the quantity of pieces of NACK information is less than or equal to a second threshold, or when the quantity of pieces of DTX information is less than or equal to a third threshold; or increase the transmit power when the quantity of pieces of ACK information is less than or equal to a first threshold, or when the quantity of pieces of NACK information is greater than or equal to a second threshold, or when the quantity of pieces of DTX information is greater than or equal to a third threshold; or decrease the transmit power when a ratio of the quantity of pieces of ACK information to N is greater than or equal to a fourth threshold, or when a ratio of the quantity of pieces of NACK information to N is less than or equal to a fifth threshold, or when a ratio of the quantity of pieces of DTX information to N is less than or equal to a sixth threshold; or

increase the transmit power when a ratio of the quantity of pieces of ACK information to N is less than or equal to a fourth threshold, or when a ratio of the quantity of pieces of NACK information to N is greater than or equal to a fifth threshold, or when a ratio of the quantity of pieces of DTX information to N is greater than or equal to a sixth threshold.

In the foregoing technical solution, when the quantity of ACKs is relatively large, the quantity of NACKs is relatively small, or the quantity of pieces of DTX is relatively small, the transmit power of the terminal device is decreased, so that power consumption of the terminal device can be reduced, and interference to a surrounding terminal device can also be reduced. When the quantity of ACKs is relatively small, or the quantity of NACKs is relatively large, or the quantity of pieces of DTX is relatively large, the transmit power of the terminal device is increased, so that a probability of receiving NACKs can be decreased, and a probability of receiving ACKs can be increased. The ratio of the quantity of ACKs to the total quantity of pieces of received feedback information, the ratio of the quantity of NACKs to the total quantity of pieces of received feedback information, or the ratio of the quantity of pieces of DTX to the total quantity of pieces of received feedback information is used to determine whether to increase or decrease the transmit power of the terminal device, so that a determining result is more reliable.

In a possible implementation, the processing module is specifically configured to: determine a transmit power adjustment amount based on the quantity of pieces of ACK information; or determine a transmit power adjustment amount based on the quantity of pieces of NACK information; or determine a transmit power adjustment amount based on the quantity of pieces of DTX information; or determine a transmit power adjustment amount based on a ratio of the quantity of pieces of ACK information to N; or determine a transmit power adjustment amount based on a ratio of the quantity of pieces of NACK information to N; or determine a transmit power adjustment amount based on a ratio of the quantity of pieces of DTX information to N; and determine the transmit power of the terminal device based on the transmit power adjustment amount.

In the foregoing technical solution, the terminal device first determines the transmit power adjustment amount, and then further determines the transmit power of the terminal device, so that the determined transmit power of the terminal device can be more accurate.

In a possible implementation, the processing module is specifically configured to: determine the transmit power adjustment amount based on a correspondence between the quantity of pieces of ACK information and the transmit power adjustment amount; or determine the transmit power adjustment amount based on a correspondence between the quantity of pieces of NACK information and the transmit power adjustment amount; or determine the transmit power adjustment amount based on a correspondence between the quantity of pieces of DTX information and the transmit power adjustment amount; or determine the transmit power adjustment amount based on a correspondence between the ratio of the quantity of pieces of ACK information to N and the transmit power adjustment amount; or determine the transmit power adjustment amount based on a correspondence between the ratio of the quantity of pieces of NACK information to N and the transmit power adjustment amount; or determine the transmit power adjustment amount based on a correspondence between the ratio of the quantity of pieces of DTX information to N and the transmit power adjustment amount.

In the foregoing technical solution, the transmit power adjustment amount is determined through table lookup, which is fast and accurate.

In a possible implementation, the quantity of pieces of ACK information is a quantity of pieces of continuously received ACK information, or the quantity of pieces of NACK information is a quantity of pieces of continuously received NACK information, or the quantity of pieces of DTX information is a quantity of pieces of continuously received DTX information. According to the foregoing technical solution, power fluctuation caused by frequent adjustment of the transmit power can be avoided.

In a possible implementation, N is greater than or equal to Y, and Y is configured by a network device or Y is preconfigured.

In the foregoing technical solution, a minimum value of the quantity of pieces of feedback information is preconfigured, and N is enabled to be greater than or equal to the minimum value, so that the determined transmit power can be more reliable.

In a possible implementation, the N pieces of feedback information are N pieces of CQI, and the processing module is specifically configured to determine the transmit power of the terminal device based on values of the N pieces of CQI.

In the foregoing technical solution, the terminal device adjusts the transmit power based on channel quality. The quantity of pieces of CQI can reflect a data transmission status, and therefore dynamic power control can be effectively performed on the terminal device in the foregoing solution.

In a possible implementation, the processing module is specifically configured to: determine an average value of the N pieces of CQI based on the values of the N pieces of CQI; and decrease the transmit power when the average value is greater than or equal to a seventh threshold, or increase the transmit power when the average value is less than or equal to a seventh threshold.

In the foregoing technical solution, an average value of values a plurality of pieces of CQI is calculated, and whether to increase or decrease the transmit power of the terminal device is further determined depending on the obtained average value, so that an occasional CQI measurement error can be avoided, and power adjustment is more accurate.

In a possible implementation, the processing module is specifically configured to: determine an average value of the N pieces of CQI based on the values of the N pieces of CQI; determine a transmit power adjustment amount based on the average value; and determine the transmit power of the terminal device based on the transmit power adjustment amount.

In the foregoing technical solution, the terminal device first determines the transmit power adjustment amount, and then further determines the transmit power of the terminal device, so that the determined transmit power of the terminal device can be more accurate.

In a possible implementation, the processing module is specifically configured to determine the transmit power adjustment amount based on a correspondence between the average value and the transmit power adjustment amount.

In the foregoing technical solution, the transmit power adjustment amount is determined through table lookup, which is fast and accurate.

In a possible implementation, the N pieces of feedback information are feedback information received by the terminal device within a time window.

In the foregoing technical solution, feedback information within a period of time is counted up, so that each power adjustment of the terminal device is fair and accurate.

In a possible implementation, the feedback information is transmission power control TPC information, and the TPC information is used to indicate a transmit power adjustment amount. The processing module is specifically configured to determine the transmit power of the terminal device based on the TPC information.

In the foregoing technical solution, a data receiving device determines the transmit power adjustment amount of the terminal device, and indicates the transmit power adjustment amount to the terminal device by using the TPC information, so that the transmit power of the terminal device can be dynamically controlled during communication between terminal devices.

In a possible implementation, the terminal device further includes a sending module, configured to send power headroom reports PHRs to M second terminal devices.

In a possible implementation, N is 1, and the feedback information is channel quality information CQI. The processing module is specifically configured to: decrease the transmit power when a value of the CQI is greater than or equal to a threshold, or increase the transmit power when a value of the CQI is less than or equal to a threshold.

In the foregoing technical solution, when the CQI is relatively small, it means that channel quality is relatively poor, and the transmit power of the terminal device is increased to increase a probability of successful data transmission. When the CQI is relatively large, it means that channel quality is relatively good, and the transmit power of the terminal device is decreased, so that power consumption of the terminal device can be reduced, and interference to a surrounding terminal device can also be reduced.

According to a fourth aspect, this application provides a terminal device. The terminal device includes: a sending module, configured to send feedback information to a first terminal device, where the feedback information is used to indicate the first terminal device to determine a transmit power of the first terminal device based on the feedback information.

In the foregoing technical solution, communication between terminal devices does not depend on a network device, and the terminal devices at two communication ends exchange information, so that transmit powers of the terminal devices are dynamically controlled.

In a possible implementation, the feedback information is acknowledgement ACK information, negative acknowledgement NACK information, discontinuous transmission DTX information, or channel quality information CQI.

In the foregoing technical solution, the transmit power of the terminal device is dynamically controlled by reusing ACK information, NACK information, DTX information, and CQI, so that signaling overheads between the terminal devices can be reduced and implementation is easy.

In a possible implementation, the feedback information is transmission power control TPC information, and the TPC information is used to indicate a transmit power adjustment amount.

In the foregoing technical solution, the second terminal device determines the transmit power adjustment amount of the first terminal device, and indicates the transmit power adjustment amount to the first terminal device by using TPC information, so that the transmit power of the terminal device can be dynamically controlled during communication between terminal devices.

In a possible implementation, the terminal device further includes a processing module, configured to determine the transmit power adjustment amount based on a quantity of acknowledgement ACK messages and/or a quantity of negative acknowledgement NACK messages.

In a possible implementation, the terminal device further includes a processing module, configured to: measure CQI, and determine the transmit power adjustment amount based on a value of the CQI.

In a possible implementation, the terminal device further includes a receiving module, configured to receive a CQI request sent by the first terminal device.

In a possible implementation, the terminal device further includes a receiving module, configured to receive a power headroom report PHR sent by the first terminal device. The processing module is specifically configured to determine the transmit power adjustment amount based on the PHR.

According to a fifth aspect, this application provides a chip, including a processor and a transceiver, configured to perform the method according to any one of the first aspect or the implementations of the first aspect.

According to a sixth aspect, this application provides a chip, including a processor and a transceiver, configured to perform the method according to any one of the second aspect or the implementations of the second aspect.

According to a seventh aspect, this application provides a terminal device, including a processor and a transceiver, configured to perform the method according to any one of the first aspect or the implementations of the first aspect.

According to an eighth aspect, this application provides a terminal device, including a processor and a transceiver, configured to perform the method according to any one of the second aspect or the implementations of the second aspect.

According to a ninth aspect, this application provides a computer-readable storage medium, including instructions. When the instructions are run on a terminal device, the terminal device is enabled to perform the method according to any one of the first aspect or the implementations of the first aspect.

According to a tenth aspect, this application provides a computer-readable storage medium, including instructions. When the instructions are run on a terminal device, the terminal device is enabled to perform the method according to any one of the second aspect or the implementations of the second aspect.

According to an eleventh aspect, this application provides a computer program product. When the computer program product is run on a terminal device, the terminal device is enabled to perform the method according to any one of the first aspect or the implementations of the first aspect.

According to a twelfth aspect, this application provides a computer program product. When the computer program product is run on a terminal device, the terminal device is enabled to perform the method according to any one of the second aspect or the implementations of the second aspect.

**BRIEF DESCRIPTION OF DRAWINGS**

FIG. 1 is a schematic diagram of a D2D scenario;
FIG. 2 is a schematic diagram of a V2X scenario;
FIG. 3 is a schematic flowchart of a power control method according to an embodiment of this application;
FIG. 4 is a schematic flowchart of a power control method according to another embodiment of this application;
FIG. 5 is a schematic flowchart of a power control method according to another embodiment of this application;
FIG. 6 is a schematic structural diagram of a terminal device according to an embodiment of this application;
FIG. 7 is a schematic structural diagram of a terminal device according to another embodiment of this application;
FIG. 8 is a schematic structural diagram of a terminal device according to an embodiment of this application; and
FIG. 9 is a schematic structural diagram of a terminal device according to another embodiment of this application.

**DESCRIPTION OF EMBODIMENTS**

The following describes the technical solutions in this application with reference to the accompanying drawings.

The technical solutions in the embodiments of this application may be applied to communication between terminal devices in various scenarios, for example, a device to device (device to device, D2D) scenario, a vehicle to everything (vehicle to everything, V2X) scenario, and a machine type communication (machine type communication, MTC)/machine to machine (machine to machine, M2M) scenario. This application may also be applied to another scenario, provided that in the scenario, a device on one side needs to indicate a device on the other side to determine a transmit power, and the device on the other side needs to interpret the transmit power in a specific manner and determine the transmit power based on the indication of the device on the one side.

The terminal device in the embodiments of this application may be user equipment, an access terminal, a subscriber unit, a subscriber station, a mobile station, a mobile station, a remote station, a remote terminal, a mobile device, a user terminal, a terminal, a wireless communications device, a user agent, or a user apparatus. The terminal device may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a future 5G network, or a terminal device in a future evolved public land mobile network (public land mobile network, PLMN). This is not limited in the embodiments of this application.

To facilitate understanding of the solutions in embodiments of this application, concepts and related technologies in this application are first described.

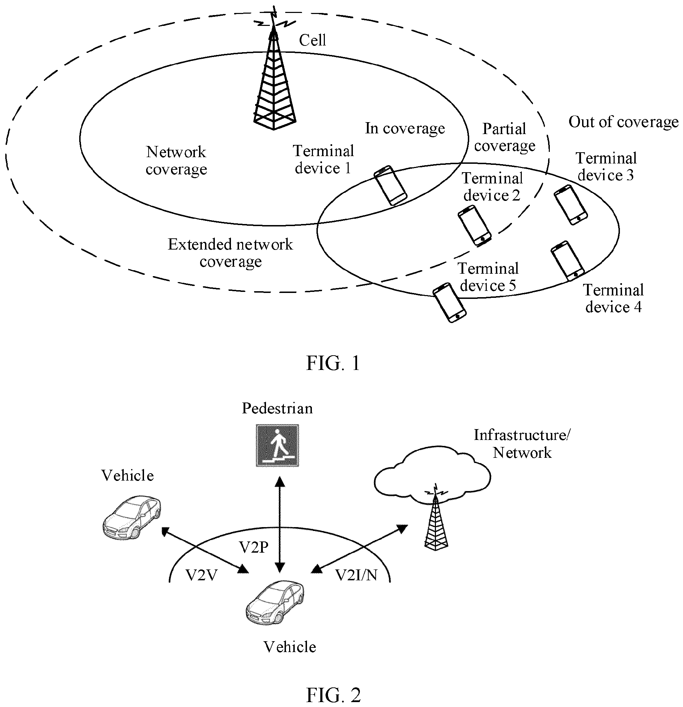

Device-to-device (device-to-device, D2D) communication: To improve spectrum utilization and fully utilize a radio frequency capability of an existing terminal device, it is considered that a spectrum resource of an existing mobile communications network is reused on a D2D communication link (which is referred to as a sidelink). To avoid interfering with a terminal device in an existing network, D2D communication does not use a downlink (downlink, DL) spectrum resource of an advanced long term evolution-advanced (long term evolution-advanced, LTE-A) system, but reuses only an uplink (uplink, UP) spectrum resource of the LTE-A system, because an anti-interference capability of a base station is much better than that of a common terminal device. For a D2D device, a probability of time division multiplexing of the uplink spectrum resource is relatively large. In this way, simultaneous receiving and sending do not need to be supported. Only sending or receiving needs to be performed at one moment. In Rel-12/13, a D2D scenario may be classified into three types: an in-coverage scenario, a partial coverage scenario, and an out-of-coverage scenario, as shown in FIG. 1. In the in-coverage scenario, a D2D device is in coverage of a network device. In the partial coverage scenario, some D2D devices are in coverage of a network device, and some D2D devices are out of the coverage of the network device. In the out-of-coverage scenario, all D2D devices are out of coverage of the network device. If a terminal device can receive a signal of a network device, the terminal device is a terminal device in network coverage. If a terminal device can receive a signal of another terminal device in network coverage, the terminal device is a terminal device in partial network coverage. If a terminal device neither receives a signal of a network device nor receives a signal of another terminal device in network coverage, the terminal device is a terminal device out of network coverage.

Vehicle to everything (vehicle to everything, V2X): In Rel-14/15/16, the V2X is successfully initiated as a main application of a D2D technology. On a basis of the existing D2D technology, a specific application requirement of the V2X is optimized in the V2X, to further reduce an access delay of a V2X device and resolve a resource conflict. The V2X specifically further includes three application requirements: internet of vehicles or vehicle to vehicle (vehicle to vehicle, V2V), vehicle to pedestrian (vehicle to pedestrian, V2P), and vehicle to infrastructure/network (vehicle to infrastructure/network, V2I/N), as shown in FIG. 2. Specifically, the V2V is vehicle-to-vehicle communication based on a long term evolution (long term evolution, LTE) system. The V2P is LTE-based vehicle-to-person (including a pedestrian, a person riding a bicycle, a driver, or a passenger) communication. The V2I is LTE-based vehicle-to-roadside unit (road side unit, RSU) communication. In addition, the V2N may be included in the V2I, and the V2N is LTE-based vehicle-to-base station/network communication. A roadside unit (RSU) includes two types: a terminal-type RSU, and a base station-type RSU. The terminal-type RSU is deployed on a roadside, and therefore, the terminal-type RSU is in a non-mobile state, and mobility does not need to be considered. The base station-type RSU can provide timing synchronization and resource scheduling for a vehicle that communicates with the base station-type RSU.

For communication between terminal devices, for example, D2D, V2X, and MTC/M2M, both a transmit end and a receive end are terminal devices, and a base station cannot obtain sufficient information to correctly adjust transmit powers of the terminal devices. Therefore, a method for controlling transmit powers of terminal devices by the base station is not applicable to communication between the terminal devices.

Therefore, how to implement dynamic power control during communication between terminal devices becomes an urgent problem to be resolved.

The embodiments of this application provide a power control method, to dynamically control transmit powers of terminal devices during communication between the terminal devices.

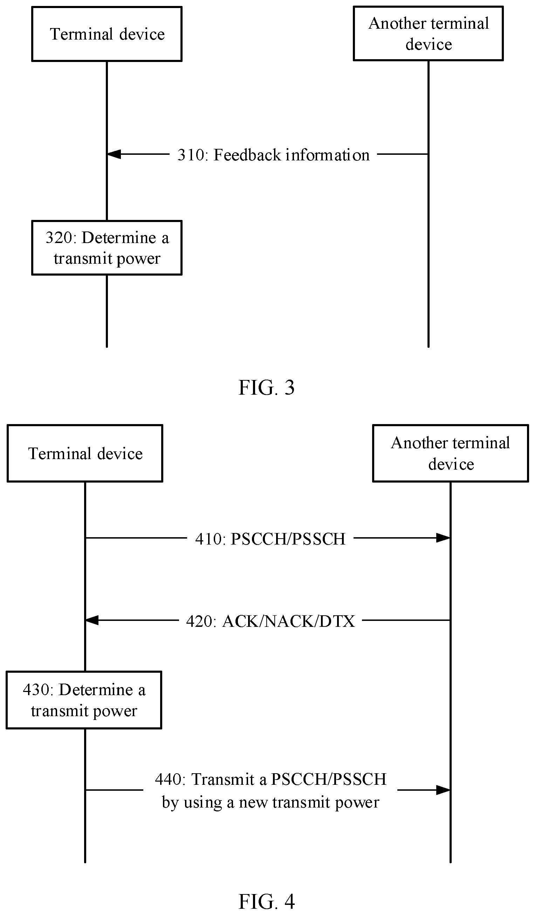

FIG. 3 is a schematic flowchart of a power control method according to an embodiment of this application. The method shown in FIG. 3 may be performed by a terminal device at a transmit end, and the method includes at least some of the following content.

310: The terminal device receives N pieces of feedback information, where N is an integer greater than or equal to 1.

320: The terminal device determines a transmit power of the terminal device based on the N pieces of feedback information.

In this embodiment of this application, an example in which the terminal device is a data sending end is used to describe the power control method in this embodiment of this application. It should be understood that, in another scenario, the terminal device may be a data receiving end.

In some embodiments, the terminal device receives the N pieces of feedback information from M other terminal devices, where M is an integer greater than or equal to 1.

The method in this embodiment of this application may be applied to a unicast scenario (M = 1), or may be applied to a multicast scenario (M ≥ 2).

It should be understood that the N pieces of feedback information may be N pieces of feedback information of one other terminal device in a plurality of data transmission processes, or may be N pieces of feedback information of the M other terminal devices in one data transmission process, or may be N pieces of feedback information of the M other terminal devices in a plurality of data transmission processes.

In this embodiment of this application, a time window may be set to count up feedback information in the time window, so as to determine N. Alternatively, a minimum value Y of a quantity of pieces of feedback information may be preconfigured or configured by a network device, and N is enabled to be greater than or equal to Y.

In the foregoing technical solution, communication between terminal devices does not depend on a network device, and the terminal devices at two communication ends exchange information, so that transmit powers of the terminal devices are dynamically controlled.

In some embodiments, the N pieces of feedback information include at least one of acknowledgement (acknowledgement, ACK) information, negative acknowledgement (negative acknowledgement, NACK) NACK information, discontinuous transmission (discontinuous transmission, DTX) information, and channel quality indicator (channel quality indicator, CQI) information. The ACK information is used to indicate that data transmission succeeds, the NACK information is used to indicate that data transmission fails, the DTX information indicates that no ACK information or NACK information is received, and the CQI information is used to indicate channel quality.

It should be understood that the N pieces of feedback information may be N pieces of feedback information of a same type or may be N pieces of feedback information of different types. For example, the N pieces of feedback information may be N pieces of ACK information; may be A pieces of ACK information and B pieces of NACK information, where a sum of A and B is N; may be A pieces of ACK information and B pieces of DTX information, where a sum of A and B is N; may be A pieces of ACK information, B pieces of NACK information, and C pieces of DTX information, where a sum of A, B, and C is N; or may be A pieces of ACK information and B pieces of CQI information, where a sum of A and B is N. When the N pieces of feedback information include feedback information of different types, the terminal device may perform comprehensive determining based on the feedback information of the different types. Because different factors are considered, the obtained transmit power is more accurate.

In some embodiments of this application, the terminal device reuses the ACK information, the NACK information, or the DTX information to determine the transmit power. Specifically, another terminal device sends ACK information, NACK information, or DTX information to the terminal device, and the terminal device determines the transmit power of the terminal device based on the ACK information, the NACK information, or the DTX information. The ACK information or the NACK information may be an ACK or NACK feedback for a hybrid automatic repeat request HARQ, an ACK or NACK feedback for an automatic repeat request ARQ, or the like.

In the foregoing technical solution, the transmit power of the terminal device is dynamically controlled by reusing ACK information, NACK information, DTX information, or CQI, so that signaling overheads between the terminal devices can be reduced and implementation is easy.

In some embodiments, the terminal device increases the transmit power when receiving a NACK. For example, in a unicast scenario, the terminal device may increase the transmit power when receiving a NACK. In a unicast or multicast scenario, the terminal device may increase the transmit power when receiving the N pieces of feedback information that include a NACK or that are all NACKs.

In some other embodiments, the terminal device increases the transmit power when receiving DTX. For example, in a unicast scenario, the terminal device may increase the transmit power when receiving DTX. In a unicast or multicast scenario, the terminal device may increase the transmit power when receiving the N pieces of feedback information that include DTX or that are all DTX.

In some other embodiments, the terminal device decreases the transmit power when receiving an ACK. For example, in a unicast scenario, the terminal device may decrease the transmit power when receiving an ACK. In a unicast or multicast scenario, the terminal device may decrease the transmit power when receiving the N pieces of feedback information that include an ACK or that are all ACKs.

In the foregoing technical solution, the transmit power of the terminal device is dynamically adjusted based on a type of feedback information, so that the transmit power can be quickly adjusted.

It should be understood that the N pieces of feedback information may be from a same another terminal device, or may be from other terminal devices of a specific proportion or a specific quantity.

The terminal device determines the transmit power of the terminal device based on a quantity of pieces of NACK information in the N pieces of feedback information.

In some embodiments, the terminal device increases the transmit power when continuously receiving a plurality of NACKs. For example, a threshold (for example, 2) may be set. The terminal device increases the transmit power when continuously receiving at least two NACKs. The terminal device does not adjust the transmit power if the quantity of continuously received NACKs is less than the threshold.

According to the foregoing technical solution, power fluctuation caused by frequent adjustment of the transmit power can be avoided.

In some other embodiments, a time window may be set to count up feedback information received in the time window. In the time window, the terminal device increases the transmit power when receiving a plurality of NACKs. If a total quantity of NACKs received by the terminal device is greater than or equal to a second threshold, the transmit power is increased; otherwise, the transmit power is not adjusted. Alternatively, if a ratio of a total quantity of NACKs received by the terminal device to the total quantity N of pieces of received feedback information is greater than or equal to a fifth threshold, the transmit power is increased. For example, if the ratio of received NACKs exceeds 80%, the transmit power is increased by 1 dB; otherwise, the transmit power is not adjusted. Alternatively, if a total quantity of NACKs received by the terminal device is less than or equal to a second threshold, the transmit power is decreased; otherwise, the transmit power is not adjusted. Alternatively, if a ratio of a total quantity of NACKs received by the terminal device to the total quantity N of pieces of received feedback information is less than or equal to a fifth threshold, the transmit power is decreased; otherwise, the transmit power is not adjusted.

In the foregoing technical solution, when the quantity of NACKs is relatively small, the transmit power of the terminal device is decreased, so that power consumption of the terminal device can be reduced, and interference to a surrounding terminal device can also be reduced. When the quantity of NACKs is relatively large, the transmit power of the terminal device is increased, so that a probability of receiving NACKs can be decreased, and a probability of receiving ACKs can be increased. Whether to increase or decrease the transmit power of the terminal device is determined depending on the ratio of the quantity of NACKs to the total quantity of pieces of received feedback information. A determining result is more reliable.

The terminal device determines the transmit power of the terminal device based on a total quantity of pieces of DTX information in the N pieces of feedback information.

In some embodiments, the terminal device increases the transmit power when continuously receiving a plurality of pieces of DTX. For example, a threshold (for example, 2) may be set. The terminal device increases the transmit power when continuously receiving at least two pieces of DTX. If the quantity of pieces of continuously received DTX is less than the threshold, the transmit power is not adjusted.

According to the foregoing technical solution, power fluctuation caused by frequent adjustment of the transmit power can be avoided.

In some other embodiments, a time window may be set to count up feedback information received in the time window. In the time window, the terminal device increases the transmit power when receiving a plurality of pieces of DTX. If a total quantity of pieces of DTX received by the terminal device is greater than or equal to a third threshold, the transmit power is increased; otherwise, the transmit power is not adjusted. Alternatively, if a ratio of a total quantity of pieces of DTX received by the terminal device to the total quantity N of pieces of received feedback information is greater than or equal to a sixth threshold, the transmit power is increased. For example, if the ratio of received DTX exceeds 80%, the transmit power is increased by 1 dB; otherwise, the transmit power is not adjusted. Alternatively, if a total quantity of pieces of DTX received by the terminal device is less than or equal to a third threshold, the transmit power is decreased; otherwise, the transmit power is not adjusted. Alternatively, if a ratio of a total quantity of pieces of DTX received by the terminal device to the total quantity N of pieces of received feedback information is less than or equal to a sixth threshold, the transmit power is decreased; otherwise, the transmit power is not adjusted.

In the foregoing technical solution, when the quantity of pieces of DTX is relatively small, the transmit power of the terminal device is decreased, so that power consumption of the terminal device can be reduced, and interference to a surrounding terminal device can also be reduced. When the quantity of pieces of DTX is relatively large, the transmit power of the terminal device is increased, so that a probability of receiving NACKs can be decreased, and a probability of receiving ACKs can be increased. Whether to increase or decrease the transmit power of the terminal device is determined depending on the ratio of the quantity of pieces of DTX to the total quantity of pieces of received feedback information. A determining result is more reliable.

In addition, the terminal device may alternatively determine the transmit power of the terminal device based on a quantity of pieces of ACK information in the N pieces of feedback information. In some embodiments, the terminal device decreases the transmit power when continuously receiving a plurality of ACKs. For example, a threshold (for example, 3) may be set. The terminal device decreases the transmit power when continuously receiving at least three ACKs. If the quantity of continuously received ACKs is less than the threshold, the transmit power is not adjusted. In some other embodiments, a time window may be set to count up feedback information received in the time window. In the time window, the terminal device decreases the transmit power when receiving a plurality of ACKs. If a total quantity of ACKs received by the terminal device is greater than or equal to a first threshold, the transmit power is decreased; otherwise, the transmit power is not adjusted. Alternatively, if a ratio of a total quantity of ACKs received by the terminal device to the total quantity N of pieces of received feedback information is greater than or equal to a fourth threshold, the transmit power is decreased; otherwise, the transmit power is not adjusted. Alternatively, if a total quantity of ACKs received by the terminal device is less than or equal to a first threshold, the transmit power is increased; otherwise, the transmit power is not adjusted. Alternatively, if a ratio of a total quantity of ACKs received by the terminal device to the total quantity N of pieces of received feedback information is less than or equal to a fourth threshold, the transmit power is increased; otherwise, the transmit power is not adjusted.

In the foregoing technical solution, when the quantity of ACKs is relatively large, the transmit power of the terminal device is decreased, so that power consumption of the terminal device can be reduced, and interference to a surrounding terminal device can also be reduced. When the quantity of ACKs is relatively small, the transmit power of the terminal device is increased, so that a probability of receiving NACKs can be decreased, and a probability of receiving ACKs can be increased. Whether to increase or decrease the transmit power of the terminal device is determined depending on the ratio of the quantity of ACKs to the total quantity of pieces of received feedback information. A determining result is more reliable.

It should be understood that the first threshold, the second threshold, the third threshold, the fourth threshold, the fifth threshold, and the sixth threshold may be the same, or may be different.

The terminal device determines the transmit power of the terminal device based on a total quantity of pieces of ACK information and a total quantity of pieces of NACK information in the N pieces of feedback information.

In some embodiments, the terminal device determines the transmit power of the terminal device based on a ratio of the total quantity of pieces of ACK information to the total quantity of pieces of NACK information in the N pieces of feedback information. For example, when the ratio of the total quantity of pieces of ACK information to the total quantity of pieces of NACK information is greater than or equal to 2, the transmit power is decreased. When the ratio of the total quantity of pieces of ACK information to the total quantity of pieces of NACK information is less than or equal to 0.5, the transmit power is increased. When the ratio of the total quantity of pieces of ACK information to the total quantity of pieces of NACK information is greater than 0.5 and less than 2, the transmit power remains unchanged.

In addition, the terminal device may alternatively determine the transmit power of the terminal device based on the total quantity of pieces of ACK information in the N pieces of feedback information and/or the total quantity of pieces of NCK information in the N pieces of feedback information and/or the total quantity of pieces of DTX information in the N pieces of feedback information. A specific combination manner is not limited in this embodiment of this application.

The terminal device may further determine the transmit power by determining a transmit power adjustment amount. For example, when the transmit power adjustment amount can indicate the terminal device to increase or decrease the transmit power (for example, having a positive or negative sign), the terminal device may directly add the transmit power adjustment amount to the original transmit power. When the transmit power adjustment amount cannot indicate the terminal device to increase or decrease the transmit power, the terminal device may first determine, with reference to the foregoing determining method, to increase or decrease the transmit power, and then increase or decrease the original transmit power by the transmit power adjustment amount.

In the foregoing technical solution, the terminal device first determines the transmit power adjustment amount, and then further determines the transmit power of the terminal device, so that the determined transmit power of the terminal device can be more accurate.

There are a plurality of methods for determining the transmit power adjustment amount by the terminal device. This is not specifically limited in this embodiment of this application.

In some embodiments, the terminal device determines the transmit power adjustment amount based on the quantity of pieces of NACK information.

Optionally, the terminal device obtains the transmit power adjustment amount through calculation based on the quantity of pieces of NACK information according to the following formula:

$$P_{adjustment} = \begin{cases} 0 & if \ N_{NACK} < N_{Th} \\ P_{step} \times (N_{NACK} - N_{Th}) & if \ N_{NACK} \geq N_{Th} \end{cases},$$

where

$P_{adjustment}$ is the transmit power adjustment amount, $N_{NACK}$ is the quantity of pieces of NACK information, $N_{Th}$ is the second threshold, and $P_{step}$ is a transmit power adjustment step. The transmit power adjustment step may be a minimum adjustment unit of the transmit power of the terminal device, or may be an adjustment unit that is of the transmit power and that is configured by the network device or preconfigured, or the like. This is not specifically limited in this embodiment of this application. When the quantity of pieces of NACK information is greater than or equal to the second threshold, the terminal device increases the transmit power. Further, the transmit power adjustment amount may be determined based on the transmit power adjustment step and a difference between the quantity of pieces of NACK information and the second threshold. For example, the second threshold is 2, the quantity of pieces of NACK information is 5, the transmit power adjustment step is 1 dB, and the transmit power adjustment amount is 1 x (5 - 2) = 3 dB.

It should be understood that the quantity of pieces of NACK information may be the total quantity of pieces of NACK information in the N pieces of feedback information. Alternatively, the quantity of pieces of NACK information may be a quantity of pieces of NACK information continuously received in the N pieces of feedback information. When there are a plurality of groups of continuously received NACK information, the quantity of pieces of NACK information may be a maximum value of quantities of the plurality of groups of continuously received NACK information. For example, the N pieces of feedback information include two pieces of continuously received NACK information and three pieces of continuously received NACK information. In this case, the quantity of NACK information is 3. The foregoing description is also applicable to the quantity of pieces of ACK information and the quantity of pieces of DXT information, and details are not described herein again.

Optionally, the terminal device determines the transmit power adjustment amount of the terminal device based on a correspondence between the quantity of pieces of NACK information and the transmit power adjustment amount. For example, the terminal device obtains the transmit power adjustment amount through table lookup. Table 1 shows a correspondence between the N pieces of feedback information and transmit power adjustment amounts. Table 2 shows another correspondence between the N pieces of feedback information and transmit power adjustment amounts. It should be understood that values and correspondences in Table 1 and Table 2 are merely examples, and may alternatively be other values and correspondences. When the power adjustment amount is a positive value, if the transmit power of the terminal device obtained after increment exceeds a maximum transmit power of the terminal device, the terminal device performs sending at the maximum transmit power.

**Table 1**

| Example 1 | NACK | Closed-loop power control (dB) |
|---|---|---|
| Unicast/Multicast | Single NACK | 0 |
| | NACK, NACK | 0 |
| | NACK, NACK, NACK | +1 |
| | NACK, NACK, NACK, NACK | +2 |

Table 2

| Example 2 | NACK | Closed-loop power control (dB) |
|---|---|---|
| Unicast | NACK | +1 |
| | NACK, NACK | +3 |

In the foregoing technical solution, the transmit power adjustment amount is determined through table lookup, which is fast and accurate.

Optionally, the terminal device determines the transmit power adjustment amount based on the ratio of the quantity of pieces of NACK information to N. For example, the terminal device obtains the transmit power adjustment amount through calculation according to a preconfigured formula.

Optionally, the terminal device determines the transmit power adjustment amount of the terminal device based on a correspondence between the ratio of the quantity of the quantity of pieces of NACK information to N and the transmit power adjustment amount. For example, the terminal device obtains the transmit power adjustment amount through table lookup. Table 3 shows a correspondence between the N pieces of feedback information and transmit power adjustment amounts. It should be understood that values and correspondences in Table 3 are merely examples, and may alternatively be other values and correspondences. When the power adjustment amount is a positive value, if the transmit power of the terminal device obtained after increment exceeds a maximum transmit power of the terminal device, the terminal device performs sending at the maximum transmit power.

**Table 3**

| Example 3 | NACK | Closed-loop power control (dB) |
|---|---|---|
| Unicast/Multicast | NACK (0%-50%) | 0 |
| | NACK (51%-80%) | +1 |
| | NACK (>80%) | +3 |

In the foregoing technical solution, the transmit power adjustment amount is determined through table lookup, which is fast and accurate.

In some other embodiments, the terminal device determines the transmit power adjustment amount based on the quantity of pieces of DTX information.

Optionally, the terminal device obtains the transmit power adjustment amount through calculation based on the quantity of pieces of DTX information according to the following formula:

$$P_{adjustment} = \begin{cases} 0 & if \ N_{DTX} < N_{Th} \\ P_{step} \times (N_{DTX} - N_{Th}) & if \ N_{DTX} \geq N_{Th} \end{cases},$$

where

$P_{adjustment}$ is the transmit power adjustment amount, $N_{DTX}$ is the quantity of pieces of DTX information, $N_{Th}$ is the third threshold, and $P_{step}$ is a transmit power adjustment step. The transmit power adjustment step may be a minimum adjustment unit of the transmit power of the terminal device, or may be an adjustment unit that is of the transmit power and that is configured by the network device or preconfigured, or the like. This is not specifically limited in this embodiment of this application. When the quantity of pieces of DTX information is greater than or equal to the third threshold, the terminal device increases the transmit power. Further, the transmit power adjustment amount may be determined based on the transmit power adjustment step and a difference between the quantity of pieces of NACK information and the third threshold. For example, the third threshold is 2, the quantity of pieces of DTX information is 5, the transmit power adjustment step is 1 dB, and the transmit power adjustment amount is 1 x (5 - 2) = 3 dB.

Optionally, the terminal device determines the transmit power adjustment amount of the terminal device based on a correspondence between the quantity of pieces of DTX information and the transmit power adjustment amount.

For example, the terminal device obtains the transmit power adjustment amount through table lookup. Table 4 shows a correspondence between the N pieces of feedback information and transmit power adjustment amounts. It should be understood that values and correspondences in Table 4 are merely examples, and may alternatively be other values and correspondences. When the power adjustment amount is a positive value, if the transmit power of the terminal device obtained after increment exceeds a maximum transmit power of the terminal device, the terminal device performs sending at the maximum transmit power.

Table 4

| Example 4 | DTX | Closed-loop power control (dB) |
|---|---|---|
| Unicast/Multicast | Single DTX | 0 |
| | DTX, DTX | 0 |
| | DTX, DTX, DTX | +1 |
| | DTX, DTX, DTX, DTX | +2 |

In the foregoing technical solution, the transmit power adjustment amount is determined through table lookup, which is fast and accurate.

Optionally, the terminal device determines the transmit power adjustment amount based on the ratio of the quantity of pieces of DTX information to N. For example, the terminal device obtains the transmit power adjustment amount through calculation according to a preconfigured formula.

Optionally, the terminal device determines the transmit power adjustment amount of the terminal device based on a correspondence between the ratio of the quantity of the quantity of pieces of DTX information to N and the transmit power adjustment amount. For example, the terminal device obtains the transmit power adjustment amount through table lookup. Table 4 shows a correspondence between the N pieces of feedback information and transmit power adjustment amounts. It should be understood that values and correspondences in Table 5 are merely examples, and may alternatively be other values and correspondences. When the power adjustment amount is a positive value, if the transmit power of the terminal device obtained after increment exceeds a maximum transmit power of the terminal device, the terminal device performs sending at the maximum transmit power.

**Table 5**

| Example 5 | DTX | Closed-loop power control (dB) |
|---|---|---|
| | DTX (0%-50%) | 0 |
| Unicast/Multicast | DTX (51%-80%) | +1 |
| | DTX (>80%) | +3 |

In the foregoing technical solution, the transmit power adjustment amount is determined through table lookup, which is fast and accurate.

In addition, the terminal device may alternatively determine the transmit power adjustment amount based on the quantity of pieces of ACK information.

Optionally, the terminal device obtains the transmit power adjustment amount through calculation based on the quantity of pieces of ACK information according to the following formula:

$$P_{adjustment} = \begin{cases} 0 & if \ N_{ACK} < N_{Th} \\ P_{step} \times (N_{ACK} - N_{Th}) & if \ N_{ACK} \geq N_{Th} \end{cases},$$

where

$P_{adjustment}$ is the transmit power adjustment amount, $N_{ACK}$ is the quantity of pieces of ACK information, $N_{Th}$ is the first threshold, and $P_{step}$ is a transmit power adjustment step. The transmit power adjustment step may be a minimum adjustment unit of the transmit power of the terminal device, or may be an adjustment unit that is of the transmit power and that is configured by the network device or preconfigured, or the like. This is not specifically limited in this embodiment of this application. When the quantity of pieces of ACK information is greater than or equal to the first threshold, the terminal device decreases the transmit power. Further, the transmit power adjustment amount may be determined based on the transmit power adjustment step and a difference between the quantity of pieces of ACK information and the first threshold. For example, the first threshold is 2, the quantity of pieces of ACK information is 5, the transmit power adjustment step is 1 dB, and the transmit power adjustment amount is 1 x (5 - 2) = 3 dB.

Optionally, the terminal device determines the transmit power adjustment amount of the terminal device based on a correspondence between the quantity of pieces of ACK information and the transmit power adjustment amount. For example, the terminal device obtains the transmit power adjustment amount through table lookup. Table 6 shows a correspondence between the N pieces of feedback information and transmit power adjustment amounts. Table 7 shows another correspondence between the N pieces of feedback information and transmit power adjustment amounts. It should be understood that values and correspondences in Table 6 and Table 7 are merely examples, and may alternatively be other values and correspondences. When the power adjustment amount is a positive value, if the transmit power of the terminal device obtained after increment exceeds a maximum transmit power of the terminal device, the terminal device performs sending at the maximum transmit power.

**Table 6**

| Example 6 | ACK | Closed-loop power control (dB) |
|---|---|---|
| Unicast/Multicast | Single ACK | 0 |
| | ACK, ACK | 0 |
| | ACK, ACK, ACK, | -1 |
| | ACK, ACK, ACK, ACK | -2 |

**Table 7**

| Example 7 | ACK | Closed-loop power control (dB) |
|---|---|---|
| Unicast | ACK | 0 |
| | ACK, ACK | -1 |

In the foregoing technical solution, the transmit power adjustment amount is determined through table lookup, which is fast and accurate.

Optionally, the terminal device determines the transmit power adjustment amount based on the ratio of the quantity of pieces of ACK information to N. For example, the terminal device obtains the transmit power adjustment amount through calculation according to a preconfigured formula.

Optionally, the terminal device determines the transmit power adjustment amount of the terminal device based on a correspondence between the ratio of the quantity of the quantity of pieces of ACK information to N and the transmit power adjustment amount. For example, the terminal device obtains the transmit power adjustment amount through table lookup. Table 8 shows a correspondence between the N pieces of feedback information and transmit power adjustment amounts. It should be understood that values and correspondences in Table 8 are merely examples, and may alternatively be other values and correspondences. When the power adjustment amount is a positive value, if the transmit power of the terminal device obtained after increment exceeds a maximum transmit power of the terminal device, the terminal device performs sending at the maximum transmit power.

**Table 8**

| Example 8 | ACK | Closed-loop power control (dB) |
|---|---|---|
| Unicast/Multicast | 0%≤ACK <50% | 0 |
| | ACK (51%-80%) | -1 |
| | ACK (>80%) | -3 |

In the foregoing technical solution, the transmit power adjustment amount is determined through table lookup, which is fast and accurate.

It should be understood that when the terminal device is in network coverage, a correspondence between the transmit power adjustment and the thresholds, the time window, the transmit power adjustment amount, and the feedback information may be configured by the network device for the terminal device, or may be preconfigured. When the terminal device is out of the network coverage, a correspondence between the transmit power adjustment and the thresholds, the time window, the transmit power adjustment amount, and the feedback information may be preconfigured.

It should be further understood that the plurality of tables may be a plurality of independent tables, or may be presented in one or more tables as partial content.

In the foregoing technical solution, the terminal device adjusts the transmit power based on channel quality. The quantity of pieces of CQI can reflect a data transmission status, and therefore dynamic power control can be effectively performed on the terminal device in the foregoing solution.

A unicast case in which N = 1 is used as an example. A specific procedure in this embodiment of this application may be shown in FIG. 4.

410: A terminal device sends a physical sidelink control channel (physical sidelink control channel, PSCCH), a physical sidelink shared channel (physical sidelink share channel, PSSCH), or another channel/signal by using a first transmit power.

420: Another terminal device feeds back a NACK, an ACK, or DTX.

430: The terminal device performs closed-loop power control based on the received NACK or ACK or DTX sent by the another terminal, to adjust the transmit power to a second transmit power.

440: The terminal device sends a PSCCH or a PSSCH by using a new transmit power (that is, the second transmit power).

In some other embodiments of this application, at least one other terminal device sends channel quality information to the terminal device, and the terminal device determines the transmit power of the terminal device based on the at least one piece of channel quality information.

Specifically, in some embodiments, the N pieces of feedback information are N pieces of CQI, and the terminal device determines the transmit power of the terminal device based on values of the N pieces of CQI. A small CQI value indicates poor channel quality, and a large CQI value indicates good channel quality.

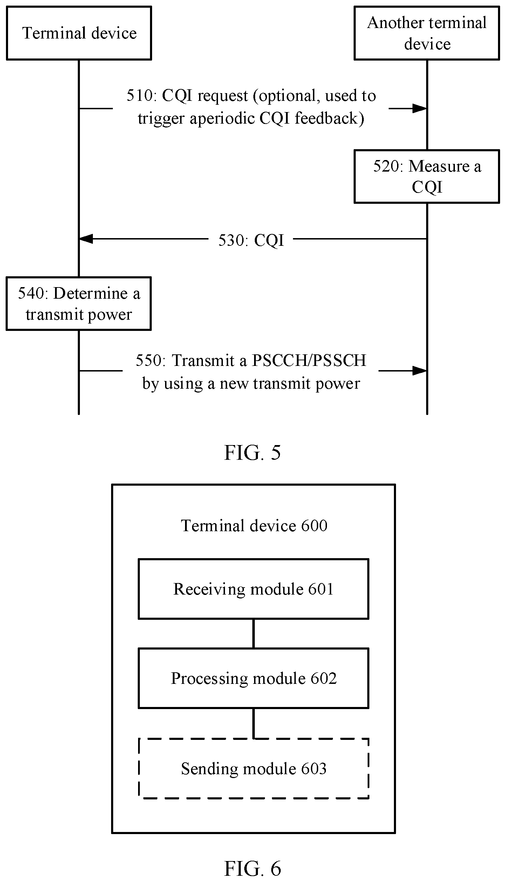

When N = 1, a specific procedure in this embodiment of this application may be shown in FIG. 5.

510 (optional): A terminal sends a CQI request and a reference signal (for example, a channel state information-reference signal (channel state information-reference signal, CSI-RS), a demodulation reference signal (demodulation reference signal, DMRS), or another (reference signal, RS)). The CQI request is used to trigger aperiodic CQI feedback, and for a periodic CQI, the CQI request may not need to be sent.

520: Another terminal device measures a CQI.

530: The another terminal device feeds back the CQI obtained through measurement to the terminal device.

540: The terminal device performs closed-loop power control based on the received CQI, to adjust a transmit power to a second transmit power.

550: The terminal device sends a PSCCH or a PSSCH by using a new transmit power (that is, the second transmit power).

Specifically, in 540, the terminal device decreases the transmit power when a value of the CQI is greater than or equal to an eighth threshold; otherwise, the transmit power is not changed. Alternatively, the terminal device increases the transmit power when the value of the CQI is less than or equal to an eighth threshold; otherwise, the transmit power is not changed.

When N ≥ 2, the terminal device determines an average value of the N pieces of CQI based on values of the N pieces of CQI. When the average value is greater than or equal to a seventh threshold, the terminal device decreases the transmit power; otherwise, the transmit power is not changed. Alternatively, the terminal device increases the transmit power when the average value is less than or equal to a seventh threshold; otherwise, the transmit power is not changed.

In the foregoing technical solution, an average value of a plurality of CQI values is calculated, and whether to increase or decrease the transmit power of the terminal device is further determined depending on the obtained average value, so that an occasional CQI measurement error can be avoided, and power adjustment is more accurate.

Optionally, the N pieces of CQI information may be from a same another terminal device, or may be from a plurality of another terminal devices. That is, the CQI information may be unicast or multicast.

In some other embodiments, a time window may be set to count up CQI information received in the time window. The terminal device receives N pieces of CQI information within the time window.

Optionally, an arithmetic average, a geometric average, a weighted average, or the like may be performed on the N pieces of CQI. The weighted average is used as an example, a newly received CQI in the time window may use a relatively large weight, and a historical CQI may use a relatively small weight.

For example, a CQI weighted average may be specifically obtained through calculation according to a formula:

$$CQI_{Average} = \frac{w_1 CQI_1 + w_2 CQI_2 + ... + w_N CQI_N}{w_1 + w_2 + ... + w_N}$$ , where

$CQI_{Average}$ is an average value of the N pieces of CQI, $CQI_1$, $CQI_2$, ..., and $CQI_N$ are N pieces of CQI, and $w_1$, $w_2$ ..., and $w_N$ are N weighted values.

Further, there are a plurality of methods for determining a transmit power adjustment amount by the terminal device. This is not specifically limited in this embodiment of this application.

In some embodiments, when N = 1, the terminal device determines the transmit power adjustment amount based on a value the CQI and the eighth threshold. For example, when the value of the CQI is greater than or equal to the eighth threshold, the transmit power adjustment amount is -1. When the value of the CQI is less than the eighth threshold, the transmit power adjustment value is +1.

In some other embodiments, when N is greater than 1, the terminal device determines the transmit power adjustment amount based on values the N pieces of CQI and the seventh threshold. For example, when N is greater than 1 and the average value is greater than or equal to the seventh threshold, the transmit power adjustment amount is -1. For example, when the average value is less than the seventh threshold, the transmit power adjustment amount is +1.

The terminal device may further determine the transmit power by determining a transmit power adjustment amount. For example, when the transmit power adjustment amount can indicate the terminal device to increase or decrease the transmit power (for example, having a positive or negative sign), the terminal device may directly add the transmit power adjustment amount to the original transmit power. When the transmit power adjustment amount cannot indicate the terminal device to increase or decrease the transmit power, the terminal device may first determine, with reference to the foregoing determining method, to increase or decrease the transmit power, and then increase or decrease the original transmit power by the transmit power adjustment amount.

In the foregoing technical solution, the terminal device first determines the transmit power adjustment amount, and then further determines the transmit power of the terminal device, so that the determined transmit power of the terminal device can be more accurate.

There are a plurality of methods for determining the transmit power adjustment amount by the terminal device. This is not specifically limited in this embodiment of this application.

In some embodiments, the terminal device determines the transmit power adjustment amount based on a correspondence between the value of the CQI and the transmit power adjustment amount.

In some embodiments, the terminal device determines the transmit power adjustment amount based on a correspondence between the average value and the transmit power adjustment amount. For example, the terminal device obtains the transmit power adjustment amount through table lookup.

Table 9 shows a correspondence between the N pieces of feedback information and transmit power adjustment amounts. It should be understood that values and correspondences in Table 9 are merely examples, and may alternatively be other values and correspondences. When the power adjustment amount is a positive value, if the transmit power of the terminal device obtained after increment exceeds a maximum transmit power of the terminal device, the terminal device performs sending at the maximum transmit power.

**Table 9**

| Example 9 | CQI value/Average value | Closed-loop power control (dB) |
|---|---|---|
| Unicast (filtered CQI)/ multicast (average CQI) | 0-3 | +2 |
| | 4-7 | +1 |
| | 8-11 | 0 |
| | 12-15 | -1 |

In the foregoing technical solution, the transmit power adjustment amount is determined through table lookup, which is fast and accurate.

In some other embodiments, the terminal device determines the transmit power adjustment amount based on the values of the N pieces of CQI and a first preset value range. Optionally, one or more value ranges may be set, and relatively approximate CQIs in a value range use a same transmit power adjustment value. In other words, one value range corresponds to one transmit power adjustment value.

$$P_{adjustment} = \begin{cases} P_{step1}(e.g.+2) & if\ CQI_{Average} < CQI_{Th1} \\ P_{step2}(e.g.+1) & if\ CQI_{Th2} < CQI_{Average} < CQI_{Th1} \\ P_{step3}(e.g.0) & if\ CQI_{Th3} < CQI_{Average} < CQI_{Th2} \\ P_{step4}(e.g.-1) & if\ CQI_{Average} > CQI_{Th3} \end{cases}$$

For example, a formula may be used, where $P_{adjustment}$ is the transmit power adjustment amount, $CQI_{Average}$ is the average value of the CQI, $N_{Th1}$, $N_{Th2}$, and $N_{Th3}$ are three thresholds, and $P_{step1}$, $P_{step2}$, $P_{step3}$, and $P_{step4}$ are different transmit power adjustment steps. The transmit power adjustment step may be a minimum adjustment unit of the transmit power of the terminal device, or may be an adjustment unit that is of the transmit power and that is configured by the network device or preconfigured, or the like. This is not specifically limited in this embodiment of this application.

It should be understood that, when N = 1, the foregoing formula is also applicable, but the average value of the CQI is not calculated.

In some other embodiments, the terminal device determines the transmit power of the terminal device based on a channel quality level. For example, the terminal device that receives data feeds back, to the terminal device, that channel quality is good, normal, or poor, and a relative transmit power adjustment amount is preconfigured for each level.

It should be understood that when the terminal device is in network coverage, a correspondence between the transmit power adjustment and the thresholds, the weighted values, the time window, the transmit power adjustment amount, and the feedback information may be configured by the network device for the terminal device, or may be preconfigured. When the terminal device is out of the network coverage, a correspondence between the transmit power adjustment and the thresholds, the time window, the transmit power adjustment amount, and the feedback information may be preconfigured.

In some other embodiments of this application, the N pieces of feedback information are N pieces of TPC information. M other terminal devices send the N pieces of TPC information to the terminal device, the TPC information is used to indicate a transmit power adjustment amount, and the terminal device determines the transmit power of the terminal device based on the transmit power adjustment amount. In other words, the transmit power adjustment amount is no longer determined by the terminal device, but is determined by another terminal device.

Optionally, in a multicast scenario, at least one of the M other terminal devices may send the TPC. The other terminal devices that send the TPC may be a group header, may be one or more other terminal devices with worst channel conditions in the group, or may be one or more terminal devices in the group that require the terminal device to adjust (for example, increase) the transmit power. Alternatively, all the M other terminal devices may send TPC, and then the terminal device selects maximum TPC or minimum TPC or an average value of the TPC to adjust the transmit power.

In some other embodiments, the another terminal device determines the transmit power adjustment amount based on a quantity of acknowledgement ACK messages and/or a quantity of negative acknowledgement NACK messages.

In some other embodiments, the another terminal device measures a CQI and determines the transmit power adjustment amount based on a value of the CQI. Optionally, before the another terminal device measures the CQI, the another terminal device receives a CQI request sent by the terminal device.

In some other embodiments, the another terminal device receives a power headroom report PHR and a last transmit power of the terminal device that are sent by the terminal device, and determines the transmit power adjustment amount based on the PHR and the last transmit power of the terminal device.

For a specific method for determining the transmit power of the terminal device by the another terminal device, refer to the foregoing description of the method for determining the transmit power by the terminal device. Details are not described herein again.

The following describes apparatus embodiments of this application with reference to FIG. 6 to FIG. 9.

FIG. 6 is a schematic structural diagram of a terminal device according to an embodiment of this application. A terminal device 600 in FIG. 6 may correspond to the foregoing terminal device. As shown in FIG. 6, the terminal device 600 includes a receiving module 601 and a processing module 602.

The receiving module 601 is configured to receive N pieces of feedback information, where N is an integer greater than or equal to 1.

The processing module 602 is configured to determine a transmit power of the terminal device based on the N pieces of feedback information.

In the foregoing technical solution, communication between terminal devices does not depend on a network device, and the terminal devices at two communication ends exchange information, so that transmit powers of the terminal devices are dynamically controlled.

Optionally, the N pieces of feedback information include at least one of acknowledgement ACK information, negative acknowledgement NACK information, discontinuous transmission DTX information, and channel quality information CQI.

In the foregoing technical solution, the transmit power of the terminal device is dynamically controlled by reusing ACK information, NACK information, DTX information, and CQI, so that signaling overheads between the terminal devices can be reduced and implementation is easy.

Optionally, the processing module 602 is specifically configured to increase the transmit power when the N pieces of feedback information include NACK information or DTX information or decrease the transmit power when the N pieces of feedback information are N pieces of ACK information.

In the foregoing technical solution, the transmit power of the terminal device is dynamically adjusted based on a type of feedback information, so that the transmit power can be quickly adjusted.

Optionally, the N pieces of feedback information include at least one of ACK information, NACK information, and discontinuous transmission DTX information. The processing module 602 is specifically configured to determine the transmit power of the terminal device based on a quantity of pieces of ACK information, and/or a quantity of pieces of NACK information, and/or a quantity of pieces of discontinuous transmission DTX information.

Optionally, the transmit power of the terminal device is determined based on the quantity of ACKs or NACKs. The quantity of pieces of ACK, the NACK, or the DTX can reflect a data transmission status, and therefore dynamic power control can be effectively performed on the terminal device in the foregoing solution.

Optionally, the processing module 602 is specifically configured to: decrease the transmit power when the quantity of pieces of ACK information is greater than or equal to a first threshold, or when the quantity of pieces of NACK information is less than or equal to a second threshold, or when the quantity of pieces of DTX information is less than or equal to a third threshold; or increase the transmit power when the quantity of pieces of ACK information is less than or equal to a first threshold, or when the quantity of pieces of NACK information is greater than or equal to a second threshold, or when the quantity of pieces of DTX information is greater than or equal to a third threshold; or decrease the transmit power when a ratio of the quantity of pieces of ACK information to N is greater than or equal to a fourth threshold, or when a ratio of the quantity of pieces of NACK information to N is less than or equal to a fifth threshold, or when a ratio of the quantity of pieces of DTX information to N is less than or equal to a sixth threshold; or increase the transmit power when a ratio of the quantity of pieces of ACK information to N is less than or equal to a fourth threshold, or when a ratio of the quantity of pieces of NACK information to N is greater than or equal to a fifth threshold, or when a ratio of the quantity of pieces of DTX information to N is greater than or equal to a sixth threshold.

In the foregoing technical solution, when the quantity of ACK is relatively large, the quantity of NACKs is relatively small, or the quantity of pieces of DTX is relatively large, the transmit power of the terminal device is decreased, so that power consumption of the terminal device can be reduced, and interference to a surrounding terminal device can also be reduced. When the quantity of ACKs is relatively small, or the quantity of NACKs is relatively large, or the quantity of pieces of DTX is relatively large, the transmit power of the terminal device is increased, so that a probability of receiving NACKs can be decreased, and a probability of receiving ACKs can be increased. The ratio of the quantity of ACKs to the total quantity of pieces of received feedback information, the ratio of the quantity of NACKs to the total quantity of pieces of received feedback information, or the ratio of the quantity of pieces of DTX to the total quantity of pieces of received feedback information is used to determine whether to increase or decrease the transmit power of the terminal device, so that a determining result is more reliable.

Optionally, the processing module 602 is specifically configured to: determine a transmit power adjustment amount based on the quantity of pieces of ACK information; or determine a transmit power adjustment amount based on the quantity of pieces of NACK information; or determine a transmit power adjustment amount based on the quantity of pieces of DTX information; or determine a transmit power adjustment amount based on a ratio of the quantity of pieces of ACK information to N; or determine a transmit power adjustment amount based on a ratio of the quantity of pieces of NACK information to N; or determine a transmit power adjustment amount based on a ratio of the quantity of pieces of DTX information to N; and determine the transmit power of the terminal device based on the transmit power adjustment amount.

In the foregoing technical solution, the terminal device first determines the transmit power adjustment amount, and then further determines the transmit power of the terminal device, so that the determined transmit power of the terminal device can be more accurate.

Optionally, the processing module 602 is specifically configured to: determine the transmit power adjustment amount based on a correspondence between the quantity of pieces of ACK information and the transmit power adjustment amount; or determine the transmit power adjustment amount based on a correspondence between the quantity of pieces of NACK information and the transmit power adjustment amount; or determine the transmit power adjustment amount based on a correspondence between the quantity of pieces of DTX information and the transmit power adjustment amount; or determine the transmit power adjustment amount based on a correspondence between the ratio of the quantity of pieces of ACK information to N and the transmit power adjustment amount; or determine the transmit power adjustment amount based on a correspondence between the ratio of the quantity of pieces of NACK information to N and the transmit power adjustment amount; or determine the transmit power adjustment amount based on a correspondence between the ratio of the quantity of pieces of DTX information to N and the transmit power adjustment amount.

In the foregoing technical solution, the transmit power adjustment amount is determined through table lookup, which is fast and accurate.

Optionally, the quantity of pieces of ACK information is a quantity of pieces of continuously received ACK information, or the quantity of pieces of NACK information is a quantity of pieces of continuously received NACK information, or the quantity of pieces of DTX information is a quantity of pieces of continuously received DTX information. According to the foregoing technical solution, power fluctuation caused by frequent adjustment of the transmit power can be avoided.

Optionally, N is greater than or equal to Y, and Y is configured by a base station or Y is preconfigured.

In the foregoing technical solution, a minimum value of the quantity of pieces of feedback information is preconfigured, and N is enabled to be greater than or equal to the minimum value, so that the determined transmit power can be more reliable.

Optionally, the N pieces of feedback information are N pieces of CQI, and the processing module 602 is specifically configured to determine the transmit power of the terminal device based on values of the N pieces of CQI.

In the foregoing technical solution, the terminal device adjusts the transmit power based on channel quality. The quantity of pieces of CQI can reflect a data transmission status, and therefore dynamic power control can be effectively performed on the terminal device in the foregoing solution.

Optionally, the processing module 602 is specifically configured to determine an average value of the N pieces of CQI based on the values of the N pieces of CQI; and decrease the transmit power when the average value is greater than or equal to a seventh threshold, or increase the transmit power when the average value is less than or equal to a seventh threshold.

In the foregoing technical solution, an average value of a plurality of CQI values is calculated, and whether to increase or decrease the transmit power of the terminal device is further determined depending on the obtained average value, so that an occasional CQI measurement error can be avoided, and power adjustment is more accurate.

Optionally, the processing module 602 is specifically configured to determine an average value of the N pieces of CQI based on the values of the N pieces of CQI; determine a transmit power adjustment amount based on the average value; and determine the transmit power of the terminal device based on the transmit power adjustment amount.

In the foregoing technical solution, the terminal device first determines the transmit power adjustment amount, and then further determines the transmit power of the terminal device, so that the determined transmit power of the terminal device can be more accurate.

Optionally, the processing module 602 is specifically configured to determine the transmit power adjustment amount based on a correspondence between the average value and the transmit power adjustment amount.

In the foregoing technical solution, the transmit power adjustment amount is determined through table lookup, which is fast and accurate.

Optionally, the N pieces of feedback information are feedback information received by the terminal device within a time window.

In the foregoing technical solution, feedback information within a period of time is counted up, so that each power adjustment of the terminal device is fair and accurate.

Optionally, the N pieces of feedback information are N pieces of transmission power control TPC information, and the TPC information is used to indicate a transmit power adjustment amount. The processing module 602 is specifically configured to determine the transmit power of the terminal device based on the TPC information.

In the foregoing technical solution, a device that receives data determines the transmit power adjustment amount of the terminal device, and indicates the transmit power adjustment amount to the terminal device by using the TPC information, so that the transmit power of the terminal device can be dynamically controlled during communication between terminal devices.

Optionally, the terminal device further includes a sending module, configured to send power headroom reports PHRs to M second terminal devices.

Optionally, N is 1, and the feedback information is channel quality information CQI. The processing module 602 is specifically configured to: decrease the transmit power when a value of the CQI is greater than or equal to a threshold, or increase the transmit power when a value of the CQI is less than or equal to a threshold.

In the foregoing technical solution, when the CQI is relatively small, it means that channel quality is relatively poor, and the transmit power of the terminal device is increased to increase a probability of successful data transmission. When the CQI is relatively large, it means that channel quality is relatively good, and the transmit power of the terminal device is decreased, so that power consumption of the terminal device can be reduced, and interference to a surrounding terminal device can also be reduced.

Optionally, the terminal device 600 further includes a sending module 603.

The sending module 603 is configured to send data or a signal to M second terminal devices, send CQI request information to the M second terminal devices, and send a power headroom report PHR and a last transmit power of the terminal device to the M terminal devices.

The receiving module 601 may be implemented by a receiver. The processing module 602 may be implemented by a processor. The sending module 603 may be implemented by a transmitter. For specific functions and beneficial effects of the receiving module 601, the processing module 602, and the sending module 603, refer to the method shown in FIG. 3. Details are not described herein again.

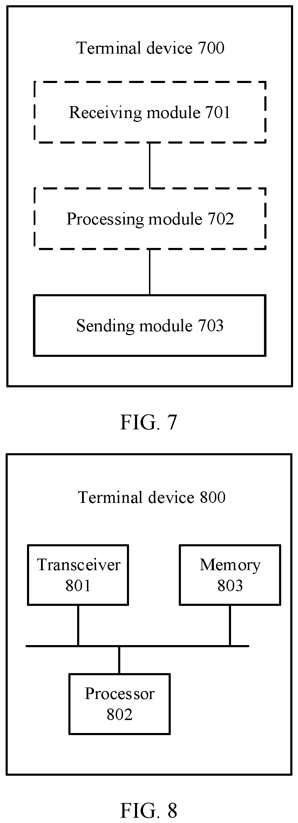

FIG. 7 is a schematic structural diagram of a terminal device according to an embodiment of this application. A terminal device 700 in FIG. 7 may correspond to the second terminal device or another terminal device. As shown in FIG. 7, the terminal device 700 includes a sending module 703.

The sending module 703 is configured to send feedback information to a first terminal device, where the feedback information is used to indicate the first terminal device to determine a transmit power of the first terminal device based on the feedback information.

In the foregoing technical solution, communication between terminal devices does not depend on a network device, and the terminal devices at two communication ends exchange information, so that transmit powers of the terminal devices are dynamically controlled.

Optionally, the feedback information is acknowledgement ACK information, negative acknowledgement NACK information, discontinuous transmission DTX information, or channel quality information CQI.

In the foregoing technical solution, the transmit power of the terminal device is dynamically controlled by reusing ACK information, NACK information, DTX information, and CQI, so that signaling overheads between the terminal devices can be reduced and implementation is easy.

Optionally, the feedback information is transmission power control TPC information, and the TPC information is used to indicate a transmit power adjustment amount.

In the foregoing technical solution, the second terminal device determines the transmit power adjustment amount of the first terminal device, and indicates the transmit power adjustment amount to the first terminal device by using TPC information, so that the transmit power of the terminal device can be dynamically controlled during communication between terminal devices.

Optionally, the terminal device further includes a processing module 702, configured to determine the transmit power adjustment amount based on a quantity of acknowledgement ACK messages and/or a quantity of negative acknowledgement NACK messages.

Optionally, the terminal device further includes a processing module 702, configured to measure CQI, and determine the transmit power adjustment amount based on a value of the CQI.

Optionally, the terminal device further includes a receiving module 701, configured to receive a CQI request sent by the first terminal device.

Optionally, the terminal device further includes a receiving module 701, configured to receive a power headroom report PHR sent by the first terminal device. The processing module 702 is specifically configured to determine the transmit power adjustment amount based on the PHR.

The receiving module 701 may be implemented by a receiver. The processing module 702 may be implemented by a processor. The sending module 703 may be implemented by a transmitter. For specific functions and beneficial effects of the receiving module 701, the processing module 702, and the sending module 703, refer to the method shown in FIG. 3. Details are not described herein again.

FIG. 8 is a schematic structural diagram of a terminal device according to another embodiment of this application. A terminal device 800 in FIG. 8 may correspond to the foregoing terminal device. As shown in FIG. 8, the terminal device 800 includes a transceiver 801, a processor 802, and a memory 803.

FIG. 8 shows only one memory and one processor. In an actual communications device product, there may be one or more processors and one or more memories. The memory may also be referred to as a storage medium, a storage device, or the like. The memory may be disposed independent of the processor, or may be integrated with the processor. This is not limited in this embodiment of this application.

The transceiver 801, the processor 802, and the memory 803 communicate with each other through an internal connection path, to transfer a control signal and/or a data signal.

The methods disclosed in the embodiments of this application may be applied to the transceiver 801 and the processor 802, or may be implemented by the transceiver 801 and the processor 802.

Specifically, the transceiver 801 is configured to receive N pieces of feedback information, where N is an integer greater than or equal to 1, send data or a signal to M second terminal devices, send CQI request information to the M second terminal devices, and send a power headroom report PHR and a last transmit power of the terminal device to the M terminal devices.

The processor 802 is configured to determine a transmit power of the terminal device based on the N pieces of feedback information.

For a specific working process and beneficial effects of the terminal device 800, refer to the descriptions in the embodiment shown in FIG. 3.

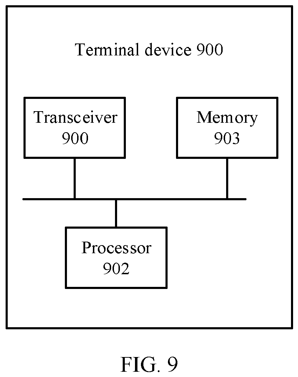

FIG. 9 is a schematic structural diagram of a terminal device according to another embodiment of this application. A communications device 900 in FIG. 9 may correspond to the second terminal device or another terminal device. As shown in FIG. 9, the terminal device 900 may include a transceiver 901, a processor 902, and a memory 903.

FIG. 9 shows only one memory and one processor. In an actual communications device product, there may be one or more processors and one or more memories. The memory may also be referred to as a storage medium, a storage device, or the like. The memory may be disposed independent of the processor, or may be integrated with the processor. This is not limited in this embodiment of this application.

The transceiver 901, the processor 902, and the memory 903 communicate with each other through an internal connection path, to transfer a control signal and/or a data signal.

The methods disclosed in the embodiments of this application may be applied to the transceiver 901 and the processor 902, or may be implemented by the transceiver 901 and the processor 902.

Specifically, the transceiver 901 is configured to send feedback information to a first terminal device, where the feedback information is used to indicate the first terminal device to determine a transmit power of the first terminal device based on channel quality indicated by the feedback information; receive data or a signal sent by the first terminal device; receive CQI request information sent by the first terminal device; and receive a power headroom report PHR and a last transmit power of the terminal device that are sent by the first terminal device.

The processor 902 is configured to determine a transmit power adjustment amount of the first terminal device based on a quantity of acknowledgement ACK messages and/or a quantity of negative acknowledgement NACK messages; or measure a CQI and determine a transmit power adjustment amount of the first terminal device based on a value of the CQI; or determine a transmit power adjustment amount of the first terminal device based on the PHR and the last transmit power of the terminal device.

For a specific working process and beneficial effects of the terminal device 900, refer to the descriptions in the embodiment shown in FIG. 3.

The transceiver described in the embodiments of this application may also be referred to as a transceiver unit, a transceiver, a transceiver apparatus, or the like. The processor may also be referred to as a processing unit, a processing board, a processing module, a processing apparatus, or the like. Optionally, a component that is in the transceiver and that is configured to implement a receiving function may be considered as a receiving unit, and a component that is in the transceiver and that is configured to implement a sending function may be considered as a sending unit. In other words, the transceiver includes the receiving unit and the sending unit. The receiving unit may also be sometimes referred to as a receiver machine, a receiver, a receiver circuit, or the like. The sending unit may also be sometimes referred to as a transmitter machine, a transmitter, a transmitter circuit, or the like.

The memory described in the embodiments of this application is configured to store computer instructions and a parameter for running the processor.

The processor in the embodiments of this application may be an integrated circuit chip, and is capable of signal processing. In an implementation process, the steps in the foregoing methods may be completed by using a hardware integrated logic circuit in the processor or instructions in a form of software. The processor in the embodiments of this application may be a general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or transistor logic device, or a discrete hardware component. The processor may implement or perform the methods, steps, and logical block diagrams that are disclosed in the embodiments of this application. The general-purpose processor may be a microprocessor, or the processor may be any conventional processor or the like. The steps in the methods disclosed with reference to the embodiments of this application may be directly performed and completed by a hardware decoding processor, or may be performed and completed by a combination of hardware in the decoding processor and a software module. The software module may be located in a mature storage medium in the art, such as a random access memory (random access memory, RAM), a flash memory, a read-only memory (read-only memory, ROM), a programmable read-only memory, an electrically erasable programmable memory, or a register. The storage medium is located in the memory, and the processor reads the instructions in the memory and completes the steps of the foregoing methods in combination with hardware in the processor.

Sequence numbers of the foregoing processes do not mean execution sequences in the embodiments of this application. The execution sequences of the processes should be determined according to functions and internal logic of the processes, and should not be construed as any limitation on the implementation processes of the embodiments of this application.

All or some of the foregoing embodiments may be implemented by using software, hardware, firmware, or any combination thereof. When software is used to implement the embodiments, the embodiments may be implemented completely or partially in a form of a computer program product. The computer program product includes one or more computer instructions. When the computer program instructions are loaded and executed on a computer, all or some of the procedures or the functions according to the embodiments of this application are generated. The computer may be a general-purpose computer, a dedicated computer, a computer network, or other programmable apparatuses. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (digital subscriber line, DSL)) or wireless (for example, infrared, radio, and microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid state disk (solid state disk, SSD)), or the like.

A person of ordinary skill in the art may be aware that units, algorithms, and steps in the examples described with reference to the embodiments disclosed in this specification can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that such an implementation goes beyond the scope of this application.

A person skilled in the art may clearly understand that, for the purpose of convenient and brief description, for detailed working processes of the foregoing system, apparatus, and unit, refer to corresponding processes in the foregoing method embodiments, and details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in an electronic form, a mechanical form, or another form.

The units described as separate parts may or may not be physically separate, and parts displayed as units may or may not be physical units, may be located at one position, or may be distributed on a plurality of network units. Some or all of the units may be selected based on actual requirements to achieve the objectives of the solutions of the embodiments.

In addition, function units in the embodiments of this application may be integrated into one processing unit, or each of the units may exist alone physically, or two or more units may be integrated into one unit.

When the functions are implemented in a form of a software function unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of this application.

The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A power control method, comprising:

   receiving, by a terminal device, N pieces of feedback information, wherein N is an integer greater than or equal to 1; and
   determining, by the terminal device, a transmit power of the terminal device based on the N pieces of feedback information.

2. The method according to claim 1, wherein the N pieces of feedback information comprise at least one of acknowledgement ACK information, negative acknowledgement NACK information, discontinuous transmission DTX information, and channel quality information CQI.

3. The method according to claim 2, wherein the determining, by the terminal device, a transmit power of the terminal device based on the N pieces of feedback information comprises:

   increasing, by the terminal device, the transmit power when the N pieces of feedback information comprise NACK information or DTX information; or
   decreasing, by the terminal device, the transmit power when the N pieces of feedback information are N pieces of ACK information.

4. The method according to claim 2, wherein the N pieces of feedback information comprise at least one of ACK information, NACK information, and discontinuous transmission DTX information; and
   the determining, by the terminal device, a transmit power of the terminal device based on the N pieces of feedback information comprises:
   determining, by the terminal device, the transmit power of the terminal device based on a quantity of pieces of ACK information, and/or a quantity of pieces of NACK information, and/or a quantity of pieces of discontinuous transmission DTX information.

5. The method according to claim 4, wherein the determining, by the terminal device, the transmit power of the terminal device based on a quantity of pieces of ACK information, and/or a quantity of pieces of NACK information, and/or a quantity of pieces of discontinuous transmission DTX information comprises:

   decreasing, by the terminal device, the transmit power when the quantity of pieces of ACK information is greater than or equal to a first threshold, or when the quantity of pieces of NACK information is less than or equal to a second threshold, or when the quantity of pieces of DTX information is less than or equal to a third threshold; or
   increasing, by the terminal device, the transmit power when the quantity of pieces of ACK information is less than or equal to a first threshold, or when the quantity of pieces of NACK information is greater than or equal to a second threshold, or when the quantity of pieces of DTX information is greater than or equal to a third threshold; or
   decreasing, by the terminal device, the transmit power when a ratio of the quantity of pieces of ACK information to N is greater than or equal to a fourth threshold, or when a ratio of the quantity of pieces of NACK information to N is less than or equal to a fifth threshold, or when a ratio of the quantity of pieces of DTX information to N is less than or equal to a sixth threshold; or
   increasing, by the terminal device, the transmit power when a ratio of the quantity of pieces of ACK information to N is less than or equal to a fourth threshold, or when a ratio of the quantity of pieces of NACK information to N is greater than or equal to a fifth threshold, or when a ratio of the quantity of pieces of DTX information to N is greater than or equal to a sixth threshold.

**6.** The method according to claim 4, wherein the determining, by the terminal device, the transmit power of the terminal device based on a quantity of pieces of ACK information, and/or a quantity of pieces of NACK information, and/or a quantity of pieces of discontinuous transmission DTX information comprises:

> determining a transmit power adjustment amount based on the quantity of pieces of ACK information; or
> determining a transmit power adjustment amount based on the quantity of pieces of NACK information; or
> determining a transmit power adjustment amount based on the quantity of pieces of DTX information; or
> determining a transmit power adjustment amount based on a ratio of the quantity of pieces of ACK information to N; or
> determining a transmit power adjustment amount based on a ratio of the quantity of pieces of NACK information to N; or
> determining a transmit power adjustment amount based on a ratio of the quantity of pieces of DTX information to N; and
> determining, by the terminal device, the transmit power of the terminal device based on the transmit power adjustment amount.

**7.** The method according to claim 6, wherein the determining a transmit power adjustment amount comprises:

> determining, by the terminal device, the transmit power adjustment amount based on a correspondence between the quantity of pieces of ACK information and the transmit power adjustment amount; or
> determining, by the terminal device, the transmit power adjustment amount based on a correspondence between the quantity of pieces of NACK information and the transmit power adjustment amount; or
> determining, by the terminal device, the transmit power adjustment amount based on a correspondence between the quantity of pieces of DTX information and the transmit power adjustment amount; or
> determining, by the terminal device, the transmit power adjustment amount based on a correspondence between the ratio of the quantity of pieces of ACK information to N and the transmit power adjustment amount; or
> determining, by the terminal device, the transmit power adjustment amount based on a correspondence between the ratio of the quantity of pieces of NACK information to N and the transmit power adjustment amount; or
> determining, by the terminal device, the transmit power adjustment amount of the terminal device based on a correspondence between the ratio of the quantity of pieces of DTX information to N and the transmit power adjustment amount.

**8.** The method according to any one of claims 3 to 7, wherein the quantity of pieces of ACK information is a quantity of pieces of continuously received ACK information, or the quantity of pieces of NACK information is a quantity of pieces of continuously received NACK information, or the quantity of pieces of DTX information is a quantity of pieces of continuously received DTX information.

**9.** The method according to any one of claims 1 to 8, wherein N is greater than or equal to Y, and Y is configured by a network device or Y is preconfigured.

**10.** The method according to claim 2, wherein the N pieces of feedback information are N pieces of CQI; and the determining, by the terminal device, a transmit power of the terminal device based on the N pieces of feedback information comprises:
determining, by the terminal device, the transmit power of the terminal device based on values of the N pieces of CQI.

**11.** The method according to claim 10, wherein the determining, by the terminal device, the transmit power of the terminal device based on values of the N pieces of CQI comprises:

> determining, by the terminal device, an average value of the N pieces of CQI based on the values of the N pieces of CQI; and
> decreasing the transmit power of the terminal device when the average value is greater than or equal to a seventh threshold, or increasing, by the terminal device, the transmit power when the average value is less than a seventh threshold.

**12.** The method according to claim 10, wherein the determining, by the terminal device, the transmit power of the terminal device based on values of the N pieces of CQI comprises:

> determining, by the terminal device, an average value of the N pieces of CQI based on the values of the N pieces of CQI;
determining, by the terminal device, a transmit power adjustment amount based on the average value; and
determining, by the terminal device, the transmit power of the terminal device based on the transmit power adjustment amount.

13. The method according to claim 12, wherein the determining, by the terminal device, a transmit power adjustment amount based on the average value comprises:
determining, by the terminal device, the transmit power adjustment amount based on a correspondence between the average value and the transmit power adjustment amount.

14. The method according to any one of claims 1 to 13, wherein the N pieces of feedback information are feedback information received by the terminal device within a time window.

15. The method according to claim 1, wherein the N pieces of feedback information are N pieces of transmission power control TPC information, and the TPC information is used to indicate a transmit power adjustment amount; and
the determining, by the terminal device, a transmit power of the terminal device based on the N pieces of feedback information comprises:
determining, by the terminal device, the transmit power of the terminal device based on the N pieces of TPC information.

16. A terminal device, wherein the terminal device comprises:

a receiving module, configured to receive N pieces of feedback information, wherein N is an integer greater than or equal to 1; and
a processing module, configured to determine a transmit power of the terminal device based on the N pieces of feedback information.

17. The terminal device according to claim 16, wherein the N pieces of feedback information comprise at least one of acknowledgement ACK information, negative acknowledgement NACK information, discontinuous transmission DTX information, and channel quality information CQI.

18. The terminal device according to claim 17, wherein the processing module is specifically configured to: increase the transmit power when the N pieces of feedback information comprise NACK information or DTX information; or decrease the transmit power when the N pieces of feedback information are N pieces of ACK information.

19. The terminal device according to claim 17, wherein the N pieces of feedback information comprise at least one of ACK information, NACK information, and discontinuous transmission DTX information; and
the processing module is specifically configured to determine the transmit power of the terminal device based on a quantity of pieces of ACK information, and/or a quantity of pieces of NACK information, and/or a quantity of pieces of discontinuous transmission DTX information.

20. The terminal device according to claim 19, wherein the processing module is specifically configured to: decrease the transmit power when the quantity of pieces of ACK information is greater than or equal to a first threshold, or when the quantity of pieces of NACK information is less than or equal to a second threshold, or when the quantity of pieces of DTX information is less than or equal to a third threshold; or
increase the transmit power when the quantity of pieces of ACK information is less than or equal to a first threshold, or when the quantity of pieces of NACK information is greater than or equal to a second threshold, or when the quantity of pieces of DTX information is greater than or equal to a third threshold; or
decrease the transmit power when a ratio of the quantity of pieces of ACK information to N is greater than or equal to a fourth threshold, or when a ratio of the quantity of pieces of NACK information to N is less than or equal to a fifth threshold, or when a ratio of the quantity of pieces of DTX information to N is less than or equal to a sixth threshold; or
increase the transmit power when a ratio of the quantity of pieces of ACK information to N is less than or equal to a fourth threshold, or when a ratio of the quantity of pieces of NACK information to N is greater than or equal to a fifth threshold, or when a ratio of the quantity of pieces of DTX information to N is greater than or equal to a sixth threshold.

21. The terminal device according to claim 19, wherein the processing module is specifically configured to: determine a transmit power adjustment amount based on the quantity of pieces of ACK information; or
determine a transmit power adjustment amount based on the quantity of pieces of NACK information; or
determine a transmit power adjustment amount based on the quantity of pieces of DTX information; or
determine a transmit power adjustment amount based on a ratio of the quantity of pieces of ACK information to N; or
determine a transmit power adjustment amount based on a ratio of the quantity of pieces of NACK information to N; or
determine a transmit power adjustment amount based on a ratio of the quantity of pieces of DTX information to N; and
determine the transmit power of the terminal device based on the transmit power adjustment amount.

22. The terminal device according to claim 21, wherein the processing module is specifically configured to: determine the transmit power adjustment amount of the terminal device based on a correspondence between the quantity of pieces of ACK information and the transmit power adjustment amount; or
determine the transmit power adjustment amount based on a correspondence between the quantity of pieces of NACK information and the transmit power adjustment amount; or
determine the transmit power adjustment amount based on a correspondence between the quantity of pieces of DTX information and the transmit power adjustment amount; or
determine the transmit power adjustment amount based on a correspondence between the ratio of the quantity of pieces of ACK information to N and the transmit power adjustment amount; or
determine the transmit power adjustment amount based on a correspondence between the ratio of the quantity of pieces of NACK information to N and the transmit power adjustment amount; or
determine the transmit power adjustment amount based on a correspondence between the ratio of the quantity of pieces of DTX information to N and the transmit power adjustment amount.

23. The terminal device according to any one of claims 18 to 22, wherein the quantity of pieces of ACK information is a quantity of pieces of continuously received ACK information, or the quantity of pieces of NACK information is a quantity of pieces of continuously received NACK information, or the quantity of pieces of DTX information is a quantity of pieces of continuously received DTX information.

24. The terminal device according to any one of claims 16 to 23, wherein N is greater than or equal to Y, and Y is configured by a network device or Y is preconfigured.

25. The terminal device according to claim 17, wherein the N pieces of feedback information are N pieces of CQI; and the processing module is specifically configured to determine the transmit power of the terminal device based on values of the N pieces of CQI.

26. The terminal device according to claim 25, wherein the processing module is specifically configured to: determine an average value of the N pieces of CQI based on the values of the N pieces of CQI; and
decrease the transmit power of the terminal device when the average value is greater than or equal to a seventh threshold, or increase, by the terminal device, the transmit power when the average value is less than a seventh threshold.

27. The terminal device according to claim 25, wherein the processing module is specifically configured to: determine an average value of the N pieces of CQI based on the values of the N pieces of CQI;
determine a transmit power adjustment amount based on the average value; and
determine the transmit power of the terminal device based on the transmit power adjustment amount.

28. The terminal device according to claim 27, wherein the processing module is specifically configured to determine the transmit power adjustment amount based on a correspondence between the average value and the transmit power adjustment amount.

29. The terminal device according to any one of claims 16 to 28, wherein the N pieces of feedback information are feedback information received by the receiving module within a time window.

30. The terminal device according to claim 16, wherein the N pieces of feedback information are N pieces of transmission power control TPC information, and the TPC information is used to indicate a transmit power adjustment amount; and the processing module is specifically configured to determine the transmit power of the terminal device based on the N pieces of TPC.

31. A computer-readable storage medium, comprising instructions, wherein when the instructions are run on a terminal

EP 3 846 551 A1

device, the terminal device is enabled to perform the method according to any one of claims 1 to 15.

28

Cell

In coverage  Partial  Out of coverage
coverage

Network  Terminal  Terminal
coverage  device 1  device 3

Terminal
device 2

Extended network
coverage

Terminal
device 5

Terminal
device 4

FIG. 1

Pedestrian

Infrastructure/
Network

Vehicle

V2P

V2V  V2I/N

Vehicle

FIG. 2

FIG. 3

FIG. 4

| Terminal device | | Another terminal device |
|---|---|---|

510: CQI request (optional, used to trigger aperiodic CQI feedback)

520: Measure a CQI

530: CQI

540: Determine a transmit power

550: Transmit a PSCCH/PSSCH by using a new transmit power

FIG. 5

Terminal device 600

Receiving module 601

Processing module 602

Sending module 603

FIG. 6

Terminal device 700

Receiving module 701

Processing module 702

Sending module 703

FIG. 7

Terminal device 800

Transceiver
801

Memory
803

Processor
802

FIG. 8

FIG. 9

# INTERNATIONAL SEARCH REPORT

| International application No. |
| --- |
| **PCT/CN2019/113612** |

| A. | CLASSIFICATION OF SUBJECT MATTER |
| --- | --- |

H04W 52/18(2009.01)i

According to International Patent Classification (IPC) or to both national classification and IPC

| B. | FIELDS SEARCHED |
| --- | --- |

Minimum documentation searched (classification system followed by classification symbols)

H04W; H04Q; H04L

Documentation searched other than minimum documentation to the extent that such documents are included in the fields searched

Electronic data base consulted during the international search (name of data base and, where practicable, search terms used)

VEN; WOTXT; CNABS; CNKI; 3GPP: 功率, 阈值, 发射功率, 传输功率, 调整, 控制, 门限, 阈值, 质量, 反馈, D2D, MTC, trans+ power, CQI, ACK, control+, adjust+, NACK, ACK, DTX, quality

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 101897129 A (ERICSSON TELEFON AB. L. M.) 24 November 2010 (2010-11-24) description, paragraphs [0048]-[0066] | 1-31 |
| X | CN 108476089 A (QUALCOMM INCORPORATED) 31 August 2018 (2018-08-31) description, paragraphs [0075]-[0078] | 1-31 |
| A | CN 103428836 A (HUAWEI TECHNOLOGIES CO., LTD.) 04 December 2013 (2013-12-04) entire document | 1-31 |
| A | CN 104854926 A (BLACKBERRY LIMITED) 19 August 2015 (2015-08-19) entire document | 1-31 |

| ☐ Further documents are listed in the continuation of Box C. | ☑ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **13 January 2020** | **17 January 2020** |

| Name and mailing address of the ISA/CN | Authorized officer |
| --- | --- |
| **China National Intellectual Property Administration (ISA/CN)** **No. 6, Xitucheng Road, Jimenqiao Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2019/113612**

| Patent document cited in search report | | | Publication date (day/month/year) | Patent family member(s) | | | Publication date (day/month/year) |
|---|---|---|---|---|---|---|---|
| CN | 101897129 | A | 24 November 2010 | US | 8422962 | B2 | 16 April 2013 |
| | | | | EP | 2220780 | A1 | 25 August 2010 |
| | | | | US | 2011003561 | A1 | 06 January 2011 |
| | | | | EP | 2220780 | A4 | 23 July 2014 |
| | | | | CN | 101897129 | B | 13 March 2013 |
| | | | | WO | 2009078762 | A1 | 25 June 2009 |
| CN | 108476089 | A | 31 August 2018 | BR | 112018014618 | A2 | 11 December 2018 |
| | | | | US | 2017208638 | A1 | 20 July 2017 |
| | | | | EP | 3406035 | A1 | 28 November 2018 |
| | | | | WO | 2017127159 | A1 | 27 July 2017 |
| | | | | AU | 2016388333 | A1 | 28 June 2018 |
| CN | 103428836 | A | 04 December 2013 | WO | 2013170676 | A1 | 21 November 2013 |
| | | | | EP | 2844008 | B1 | 15 February 2017 |
| | | | | CN | 103428836 | B | 30 March 2016 |
| | | | | US | 9510298 | B2 | 29 November 2016 |
| | | | | EP | 2844008 | A1 | 04 March 2015 |
| | | | | US | 2015071267 | A1 | 12 March 2015 |
| | | | | EP | 2844008 | A4 | 08 July 2015 |
| CN | 104854926 | A | 19 August 2015 | US | 2014086157 | A1 | 27 March 2014 |
| | | | | TW | 201419904 | A | 16 May 2014 |
| | | | | EP | 2901774 | B1 | 18 January 2017 |
| | | | | KR | 101754007 | B1 | 04 July 2017 |
| | | | | WO | 2014051664 | A1 | 03 April 2014 |
| | | | | US | 10154467 | B2 | 11 December 2018 |
| | | | | EP | 2901774 | A1 | 05 August 2015 |
| | | | | TW | I499335 | B | 01 September 2015 |
| | | | | KR | 20150060848 | A | 03 June 2015 |
| | | | | CN | 104854926 | B | 09 November 2018 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201811271837